# EUROPÄISCHE PATENTSCHRIFT

(11) **EP 3 652 578 B1**
(45) Veröffentlichungstag und Bekanntmachung des Hinweises auf die Patenterteilung: **01.09.2021**
(21) Anmeldenummer: 18743430.3
(22) Anmeldetag: 10.07.2018
(51) Int. Cl.: G02B 26/06, G01N 21/03, G02B 27/00

(54) **ANORDNUNG UND VERFAHREN ZUR STÖRUNGSKORREKTUR FÜR BILDGEBENDE STRÖMUNGSMESSVERFAHREN**
ARRANGEMENT AND METHOD FOR DISTURBANCE CORRECTION FOR IMAGING FLOW MEASURING PROCESSES
DISPOSITIF ET PROCÉDÉ DE CORRECTION DE PERTURBATIONS POUR PROCÉDÉS DE MESURE D'ÉCOULEMENT OPTIQUES

(30) Priorität: 11.07.2017 DE 102017211837
(43) Veröffentlichungstag der Anmeldung: 20.05.2020
(73) Patentinhaber: Technische Universität Dresden, 01069 Dresden (DE)
(72) Erfinder: BÜTTNER, Lars, 01157 Dresden (DE); CZARSKE, Jürgen, 01069 Dresden (DE); TEICH, Martin, 01157 Dresden (DE); KOUKOURAKIS, Nektarios, 01705 Freital (DE)
(74) Vertreter: Kailuweit & Uhlemann Patentanwälte Partnerschaft mbB
(86) Internationale Anmeldenummer: PCT/EP2018/068669
(87) Internationale Veröffentlichungsnummer: WO 2019/011916

(56) Entgegenhaltungen:
- WO-A1-2012/100763
- WO-A1-2014/122156

## Beschreibung

Die Erfindung betrifft eine Anordnung und ein Verfahren zur Störungskorrektur für Strömungsmessverfahren, insbesondere bildgebende Strömungsmessverfahren.

An vielen Prozessen der chemischen Verfahrenstechnik sind Fluide mit unterschiedlichen Brechungsindizes beteiligt, die durch eine Grenzfläche bzw. Grenzschicht voneinander getrennt sind. Diese Grenzfläche ist i.d. R. zeitlich veränderlich ausgebildet. Die resultierenden Brechungsindexfluktuationen stellen eine zeitlich veränderliche, fluktuierende optische Störung dar. Diese kann die Leistungsfähigkeit optischer Messverfahren signifikant verschlechtern oder eine Messung vollständig unmöglich machen. Beispielsweise kommt es bei einem Wasserbecken mit freier Oberfläche, auf der sich Wellen ausbilden können, zu einer stochastischen Brechung der Lichtstrahlen an der Grenzfläche Wasser-Luft, und eine Messung der Strömungsgeschwindigkeit im Wasser durch die Grenzfläche ist stark störungsbehaftet. Strömungsmesstechnisch stellen fluktuierende Grenzflächen daher eine große Herausforderung dar. Technische Relevanz besteht bei einer Vielzahl von Anwendungen, z. B. bei Filmströmungen zur Kühlung, Reinigung oder Destillation, bei Flüssigkeitsstrahlen (Jets), bei Messungen in levitierten Tropfen, an Wellenkanälen, in Flammen oder in Strömungen mit Konzentrationsgradienten.

Auch statische Objekte, z. B. optische Zugangsfenster, können unter bestimmten Bedingungen, z. B., wenn sie eine Krümmung aufweisen, optische Störungen verursachen.

Aus dem Stand der Technik sind verschiedene Ansätze bekannt, die einen Beitrag zur Lösung des beschriebenen Problems leisten können. Für statische Störungen besteht die Möglichkeit, eine starre Korrekturoptik in den Strahlengang einzubringen. Ändern sich die optischen Gegebenheiten, indem z. B. ein anderer Bildausschnitt betrachtet werden soll, oder indem die Betrachtung unter einem anderen Winkel durchgeführt werden soll, ist die Korrekturoptik nicht mehr an die Situation angepasst, und es treten erneut optische Störungen auf.

Fluktuierende Störungen können nicht mittels starrer Korrekturoptiken kompensiert werden. Ein Lösungsansatz insbesondere für Filmströmungen, besteht in der Verwendung eines ortsfesten Hintergrundbilds, welches sich z. B. auf der Wand eines Strömungskanals befindet und gleichzeitig zur Strömungsmessung durch die freie Oberfläche hindurch beobachtet wird. Anhand der Verzerrung des Hintergrundbilds, das z. B. ein Punktmuster darstellt, können Rückschlüsse auf die Verzerrung des Messbilds gezogen und eine softwareseitige rechnerische Korrektur des Messbilds durchgeführt werden.

Als Beispiel für ein solches softwareseitiges Korrekturverfahren ist die Hintergrund-Schlieren-Methode (BOS für Background Oriented Schlieren) zu nennen. Das z. B. in Richard, H. und Raffel, M.: Principle and applications of the background oriented schlieren (BOS) method. Measurement Science and Technology, 12 (2001), S. 1576-1585, vorgestellte Verfahren wurde im Wesentlichen zur Sichtbarmachung von Dichte- bzw. Brechungsindexgradienten in transparenten Medien entwickelt. Es wird die scheinbare Hintergrundpunktbewegung, die aufgrund von Brechungsindexgradienten entsteht, vermessen, indem erst ein Bild des Hintergrundes aufgenommen wird, ohne dass der Brechungsindexgradient sich zwischen Hintergrund und Kamera befindet. Dieses Bild wird als Referenzbild verwendet. Das zweite erforderliche Bild - das Messbild - wird mit dem zu untersuchenden Brechungsindexgradienten zwischen Hintergrund und Kamera aufgenommen. Die Hintergrundpunkte sind im Vergleich zum Referenzbild auf eine andere Stelle des Bildes abgebildet. Die Verschiebung der Hintergrundpunkte zwischen den beiden Bildern kann über die Kreuzkorrelation exakt bestimmt werden, wenn der Hintergrund ein unregelmäßiges Punktemuster mit deutlichem Kontrast aufweist. Das Ergebnis der Kreuzkorrelation stellt ein Verschiebungsvektorfeld zwischen Punkten auf dem Referenzbild und Punkten auf dem Messbild dar, aus dem das Brechungsindexgradientenfeld berechnet werden kann, und das letztlich zur softwareseitigen Korrektur der Strömungsmessdaten verwendet werden kann. Eine Möglichkeit zur hardwareseitigen Korrektur optischer Störungen bietet die BOS-Methode nicht.

Verschiedene Möglichkeiten zur auch hardwareseitigen Korrektur optischer Störungen können dem Stand der Technik im Bereich der adaptiven Optik entnommen werden. Bekannt sind Verfahren, bei denen durch den Einsatz von Wellenfrontsensoren und -modulatoren Phasenaberrationen erfasst und ausgeglichen werden können. Beispielsweise in der DE 602 23 130 T2 sind derartige Verfahren zur Strahlsteuerung von Hochenergie-Laserstrahlen offenbart.

Aus der US 7,118,216 B2 ist ein Scanning-Laser-Ophthalmoskop zur Untersuchung des Augenhintergrunds bekannt, bei dem von der Netzhaut reflektiertes Licht anteilig auf einen Wellenfrontsensor geleitet wird, um die durch das Auge verursachte Wellenfrontverzerrung zu detektieren, wobei ein im optischen Weg angeordneter deformierbarer Spiegel so angesteuert wird, dass die Wellenfrontverzerrung zur Bildgebung kompensiert wird. Besondere Anforderungen an die Geschwindigkeit des Regelsystems werden in diesem Anwendungsfeld nicht gestellt.

Auch im Bereich der Mikroskopie ist die Anwendung adaptiver Optiken Stand der Technik, wobei das Ziel hier häufig darin besteht, die Untersuchungsqualität biologischer Proben zu verbessern.

In Cui, M. und Yang, C. Implementation of a digital optical phase conjugation system and its application to study the robustness of turbidity suppression by phase conjugation. Optics Express 18, Nr. 4 (2010), S. 3444 wird ein Verfahren der adaptiven Optik mit offenem Regelkreis vorgestellt, das als "digitale optische Phasenkonjugation" bezeichnet wird und zur Korrektur von Phasenverzerrungen durch ein optisch trübes, insbesondere biologisches Medium geeignet ist. Dabei werden eine CCD-Kamera als Sensor und ein Flächenlichtmodulator als Aktor eingesetzt. Das beschriebene Verfahren erfordert es, dass jedes Pixel der Kamera ein virtuelles Bild auf einem korrespondierenden Pixel des Flächenlichtmodulators erzeugt, und umgekehrt. Das Verfahren verlangt dadurch eine aufwändige Kalibrierung und einen sehr hohen Justageaufwand. Instantane Korrekturen, insbesondere fluktuierender Störungen, können nicht vorgenommen werden.

Ebenfalls bekannt ist der Einsatz von adaptiven Optiken zur Korrektur von optischen Verzerrungen bei klein ausgebildeten Grenzflächen mit streuenden Medien, an welchen das Licht direkt gestreut und im Bereich klein ausgebildeter Flächen reflektiert wird.

Die US 2015/0160118 A1 zeigt ein optisches Messsystem zum Messen von flüssigen Proben, welche in den Löchern von Mikroplatten angebracht sind. Das System weist u.a. eine Lichtquelle zur Beleuchtung der Proben und einen Detektor zur Messung der optischen Signale auf. Zwischen Lichtquelle und den Löchern ist ein optisches Element wie beispielsweise ein spatial light modulator angeordnet, welches Verzerrungen an der Grenzfläche der flüssigen Proben korrigiert.

Czarske, J. W., Koukourakis, N., Fregin, B., König, J. und Büttner, L. Adaptive flow-field measurements using digital holography. Proceedings of SPIE, Vol. 10074 (2017), S. 10074F-1 - 100740F-7 beschreibt Strömungsmessungen und die Korrektur optischer Störungen mittels digitaler Holographie auf dem Gebiet der Fluidmesstechnik. Hier wird Licht an einer diffus streuenden Folie reflektiert. Der Einfluss der damit einhergehenden Mehrfachstreuung auf die Bildgebung wird durch die Phasenkompensation eines Modulators verringert. Dadurch wird das Bild mit vermindertem Kontrast wiederhergestellt.

Die US 2010/0195048 A1 offenbart die Verwendung von adaptiver Optik im medizinischen Bereich, speziell für die Ophtalmoskopie, durch welche u.a. die Netzhaut des Auges untersucht wird. Dabei wird ein Teil des Auges durch ein erstes optisches Modul abgetastet, wobei das reflektierte Licht in eine Detektionsvorrichtung geleitet wird und den untersuchten Teil des Auges abbildet. Ein zweites optisches Modul ermittelt und korrigiert die optische Verzerrung. Durch die Streuung des Lichtes am Gewebe kommt es zu Mehrfachreflexionen, wodurch sich keine definierten Grenzflächen ausbilden können. Nachteilig kann die Korrektur der optischen Verzerrung an der Netzhaut damit nur abschnittsweise, nämlich Zeile für Zeile und somit in einem kleinskaligen Bereich erfolgen, da das erste Modul hierfür einen Linescanner zum Abtasten des Auges aufweist. Eine instantane Korrektur des kompletten Sichtfeldes ist somit nicht möglich. Indem das Messverfahren auf einem konfokal ausgebildeten Prinzip beruht, wird das gestreute Licht der umliegenden Gewebeschichten durch Pinholes im Strahlengang der Vorrichtung bewusst unterdrückt, damit es nicht im Detektor ankommt und die optische Abbildungsqualität der durch den Scanner angefahrenen Messregion verbessert wird.

Aufgabe der vorliegenden Erfindung ist es daher, die aufgeführten Nachteile des Stands der Technik zu überwinden und eine Anordnung sowie ein Verfahren anzugeben, mittels derer optische Störungen, die durch eine kontinuierliche Phasenübergangsgrenzfläche zwischen zwei Fluiden mit unterschiedlicher optischer Dichte hervorgerufen werden, instantan und hardwareseitig zu korrigieren. Insbesondere soll durch die Anordnung und das Verfahren eine großskalige Korrektur der optischen Störungen an optisch ebenen und großflächig ausgebildeten Grenzflächen unter Nutzung des Fresnel-Reflexes ermöglicht werden.

Die Aufgabe wird gelöst durch eine wellenfrontsensorlose Anordnung zur Korrektur optischer Störungen durch eine Grenzfläche mit den Merkmalen des Anspruchs 1 und eine wellenfrontsensorbasierte Anordnung zur Korrektur optischer Störungen durch eine Grenzfläche mit den Merkmalen des Anspruchs 9 sowie ein wellenfrontsensorloses Verfahren zur Korrektur optischer Störungen durch eine Grenzfläche mit den Merkmalen des Anspruchs 8 und ein wellenfrontsensorbasiertes Verfahren zur Korrektur optischer Störungen durch eine Grenzfläche mit den Merkmalen des Anspruchs 16. Weiterbildungen der Erfindung sind in Unteransprüchen angegeben.

Die erfindungsgemäße Lösung basiert darauf, bei bildgebenden Strömungsmessverfahren, die zur Vermessung, z. B. zur Ermittlung der Strömungsgeschwindigkeit, eines strömenden Fluids eingesetzt werden, durch eine Grenzfläche verursachte optische Störungen mittels eines Wellenfrontmodulators zu korrigieren. Die erfindungsgemäße Lösung kann wellenfrontsensorlos oder wellenfrontsensorbasiert umgesetzt werden.

Vorteilhaft bietet die erfindungsgemäße Lösung die Möglichkeit zur hardwareseitigen, instantanen Korrektur optischer Störungen. Besonders vorteilhaft ist, dass die Erfindung durch den Einsatz schneller Komponenten und Algorithmen in Echtzeit betrieben werden kann. Unter "Echtzeit" ist dabei zu verstehen, dass die Frequenz der Reaktion auf die Fluktuation oder zeitliche Veränderung der optischen Störung, also die gezielte Veränderung der Einstellung des Wellenfrontmodulators, höher ist als die Fluktuationsfrequenz der optischen Störung.

Der Begriff "Grenzfläche" als ein Bereich, in dem Fluide mit unterschiedlicher optischer Dichte oder unterschiedlichen Brechungsindizes aufeinandertreffen, umfasst dabei im Sinne der Erfindung optisch großskalig, eben und kontinuierlich ausgebildete Phasenübergangsgrenzflächen. An diesen Grenzflächen wird Licht gemäß der fresnelschen Formeln reflektiert. Erfindungsgemäß umfasst der Begriff "Grenzfläche" neben Grenzflächen, wie z. B. der Wasser-Luft-Grenzfläche bei einem Wasserbecken oder optischen Zugangsfenstern, auch Grenzschichten, z. B. bei Flammen in Form von Temperaturgradienten, oder auch Grenzschichten infolge von Konzentrationsgradienten. Die Erfindung ist besonders für fluktuierende Grenzflächen, aber auch für statische Grenzflächen, z. B. optische Zugangsfenster, geeignet.

Unter dem Begriff "Fluid" wird eine Flüssigkeit, ein Gas oder ein Dampf verstanden, also ein nichtfestes Kontinuum, auf das die Gesetze der Fluidmechanik anwendbar sind.

Ein "Wellenfrontmodulator" stellt im Sinne dieser Erfindung eine Einrichtung zur gezielten Beeinflussung der Phase und/oder der Amplitude einer Lichtwelle dar. Der Wellenfrontmodulator kann einzeln ansteuerbare Elemente als Aktoren und somit eine Pixelstruktur oder eine kontinuierlich variierbare Aktorschicht aufweisen. Der Wellenfrontmodulator kann transmittierend gestaltet sein oder eine reflektierende beleuchtete Oberfläche aufweisen.

Die Erfindung kann bei allen bildgebenden Strömungsverfahren angewendet werden, bei denen ein Bildfeld der Strömung berührungslos mit einer Kamera betrachtet wird. Als Beispiele sind Particle Imaging Velocimetry (PIV), Particle Tracking Velocimetry (PTV), Molecular Tagging Velocimetry (MTV) oder Doppler Global Velocimetry zu nennen. Besonders bevorzugt wird die Erfindung beim PIV-Verfahren verwendet.

Zur Vermessung der Strömung muss das strömende Fluid Partikel enthalten, die mit der im bildgebenden Strömungsmessverfahren eingesetzten Beleuchtung wechselwirken. Ist das strömende Fluid transparent, werden zumeist als "Tracer" bezeichnete Partikel als Messobjekte in das strömende Fluid eingebracht, die die Strömung visualisieren, ohne sie erheblich zu beeinflussen. Der Tracer umfasst dabei Streupartikel oder fluoreszent ausgebildete Partikel, im Folgenden fluoreszierende Partikel genannt. Im Sinne der Erfindung weisen die Streupartikel keine fluoreszenten Eigenschaften auf. Die Streupartikel sind weiterhin zur Realisierung von Streuung ausgebildet. In Ausführungsformen sind die Streupartikel als silberbeschichtete Hohlglaskugeln mit einem Durchmesser von ca. 10 µm ausgebildet. Im Sinne der Erfindung weisen die fluoreszierenden Partikel fluoreszente Eigenschaften auf und emittieren Licht gemäß der stokesschen Regel.

Im Folgenden werden im Sinne einer vereinfachten Schreibweise die Begriffe "Streuung" oder "gestreutes Licht" verwendet, wobei sich diese im Falle von Streupartikel auf die diffuse Reflexion und im Falle von fluoreszierenden Partikeln auf das emittierte Licht beziehen.

Weist das strömende Fluid intrinsische Streupartikel oder intrinsisch fluoreszierende Partikel auf, mittels derer die Strömung visualisiert werden kann, ist der Zusatz von Tracern nicht notwendig. Die intrinsisch ausgebildeten Streupartikel oder fluoreszierenden Partikel werden im Folgenden unter dem Begriff "intrinsische Partikel" zusammengefasst. Soweit nicht anders angegeben, wird im Folgenden immer der Begriff "Tracer" verwendet, wobei beim Vorliegen intrinsischer Partikel im Fluid statt des Tracers die intrinsischen Partikel gemeint sind.

Die erfindungsgemäße wellenfrontsensorlose Anordnung zur Korrektur von durch eine Grenzfläche verursachten optischen Störungen in bildgebenden Strömungsmessverfahren, die zur Vermessung eines strömenden Fluids eingesetzt werden, wobei das strömende Fluid Tracer enthält, die als Streupartikel ausgebildet sind, weist eine Beleuchtungsquelle, ausgebildet zur Beleuchtung eines Messfelds, welches von dem strömenden Fluid durchströmt wird, auf, wobei im von der Beleuchtungsquelle beleuchteten Messfeld ein ortsfestes, charakteristisches optisches Muster, häufig auch als "Hintergrundmuster" bezeichnet, angeordnet ist. Als Beleuchtungsquelle wird beispielsweise ein Laser verwendet. Das Messfeld kann beispielsweise der von der Beleuchtungsquelle beleuchtete Bereich eines Strömungskanals sein, der von dem strömenden Fluid durchströmt wird.

Des Weiteren weist die erfindungsgemäße wellenfrontsensorlose Anordnung eine Kamera auf, die zur, insbesondere gleichzeitigen, Aufnahme des Strömungsbilds und des Musterbilds ausgebildet ist. Als "Strömungsbild" wird dabei die Abbildung des von den Tracern im strömenden Fluid gestreute Licht und als "Musterbild" die Abbildung des von dem ortsfesten Hintergrundmuster gestreuten Lichts bezeichnet. Dabei entspricht das Strömungsbild einer direkten Abbildung dessen, was mit den Messobjekten in der Strömung passiert. Der Begriff "Kamera" umfasst im Sinne der Erfindung alle optischen Apparaturen, mit denen ein Bild auf einem Speichermedium aufgezeichnet und/oder über eine Schnittstelle zur Weiterverarbeitung übermittelt werden kann, z. B. auch Detektorarrays.

Die Beleuchtungsquelle und/oder die Kamera sind so angeordnet, dass die Beleuchtung und/oder die Beobachtung des strömenden Fluids und des Hintergrundmusters durch eine Grenzfläche erfolgt. Insbesondere sind sowohl die Beleuchtungsquelle als auch die Kamera so angeordnet, dass die Beleuchtung und die Beobachtung des strömenden Fluids durch eine Grenzfläche erfolgt.

Des Weiteren weist die erfindungsgemäße wellenfrontsensorlose Anordnung einen ansteuerbaren Wellenfrontmodulatorauf, der im optischen Weg zwischen dem Messfeld und der Kamera oder im optischen Weg zwischen der Beleuchtungsquelle und dem Messfeld oder im optischen Weg zwischen der Beleuchtungsquelle und dem Messfeld sowie zwischen dem Messfeld und der Kamera angeordnet ist. Vorzugsweise ist der ansteuerbare Wellenfrontmodulator im optischen Weg zwischen dem Messfeld und der Kamera angeordnet.

Des Weiteren weist die erfindungsgemäße wellenfrontsensorlose Anordnung eine Signalverarbeitungsplattform auf, die der Auswertung zumindest des Musterbilds, wobei zur Ermittlung eines Gütefaktors der Abbildung das Musterbild mit dem Hintergrundmuster verglichen wird, und der Ansteuerung des Wellenfrontmodulators zu dessen Auszurichtung, ausgebildet ist. Zu diesem Zweck ist die Signalverarbeitungsplattform informationstechnisch mit der Kamera und mit dem Wellenfrontmodulator verbunden, wobei die informationstechnische Verbindung drahtgestützt oder drahtlos ausgeführt sein kann. Die Ansteuerung des Wellenfrontmodulators erfolgt durch die Signalverarbeitungsplattform dergestalt, dass der Gütefaktor iterativ optimiert wird.

O. B. d. A. ist der Gütefaktor als Maß für die optische Ähnlichkeit des Musterbilds, also der Abbildung des Hintergrundmusters, mit dem tatsächlichen Hintergrundmuster, in einer Weise definiert, dass er mit steigender optischer Ähnlichkeit zwischen dem Musterbild und dem Hintergrundmuster steigt. In diesem Fall wird der Wellenfrontmodulator von der Signalverarbeitungsplattform dergestalt angesteuert und ausgerichtet, dass der Gütefaktor der nach der Wechselwirkung des von dem Hintergrundmuster gestreuten Lichts mit dem Wellenfrontmodulator erfolgenden Abbildung des Hintergrundmusters auf die Kamera erhöht wird. Geeignete Gütefaktoren sind z. B. Schärfemetriken, beispielsweise die maximale Ortsfrequenz, die maximale Standardabweichung, das Helligkeitshistogramm, der Intensitätsgradient oder der Kreuzkorrelationskoeffizient. Der normierte Kreuzkorrelationskoeffizient ist ≤ 1, wobei ein normierter Kreuzkorrelationskoeffizient von 1 der vollständigen Übereinstimmung von Musterbild und Hintergrundmuster entspricht.

Selbstverständlich kann der Gütefaktor auch in anderer geeigneter Form definiert werden, z. B. so, dass er mit steigender optischer Ähnlichkeit, also sinkender Abweichung, zwischen dem Musterbild und dem Hintergrundmuster sinkt, und es versteht sich, dass die Ansteuerung des Wellenfrontmodulators dann dergestalt erfolgt, dass sich der Gütefaktor verringert. In jedem Fall erfolgt die Ansteuerung des Wellenfrontmodulators so, dass sich die optische Ähnlichkeit zwischen Musterbild und Hintergrundmuster erhöht. Mit anderen Worten wird die Einstellung des Wellenfrontmodulators so angepasst, dass die von der Grenzfläche hervorgerufene optische Störung korrigiert, bevorzugt möglichst weitgehend kompensiert, wird.

Über die Korrektur der optischen Störung durch Optimierung der Abbildung des Hintergrundmusters und entsprechende Einstellung des Wellenfrontmodulators wird auch die Abbildung der Tracer, also das Strömungsbild, korrigiert. Die Auswertung des Strömungsbilds erfolgt bevorzugt über dieselbe Signalverarbeitungsplattform wie die Auswertung des Musterbilds, kann aber auch über eine geeignete andere Signalverarbeitungsplattform erfolgen.

Neben den genannten Komponenten kann die erfindungsgemäße wellenfrontsensorlose Anordnung auch weitere, in zweckmäßiger Weise angeordnete optische Komponenten, insbesondere Strahlteiler, Reflexionsprismen und Filterelemente, aufweisen.

Die Optimierung des Gütefaktors erfolgt auf iterative Weise. Die Optimierung ist abgeschlossen, wenn der Gütefaktor ein Optimum erreicht. Alternativ kann auch ein bei der Optimierung zu erreichender Grenzwert für den Gütefaktor vorgegeben werden.

Da im Fall einer fluktuierenden bzw. zeitlich veränderlichen Störung der Gütefaktor im Zeitverlauf vom optimalen Wert abweicht, wird der Optimierungsalgorithmus fortlaufend wiederholt. Auf Veränderungen der optischen Störung durch die Grenzfläche kann dadurch instantan reagiert werden.

Die wellenfrontsensorlose Anordnung zeichnet sich durch einen besonders einfachen Aufbau aus und ist damit unter anderem kostengünstig zu realisieren. Zudem wird bei der wellenfrontsensorlosen Anordnung kein zusätzlicher optischer Zugang zur Messstelle benötigt.-

In einer Ausführungsform der erfindungsgemäßen wellenfrontsensorlosen Anordnung enthält das strömende Fluid fluoreszierende Partikel, wobei das Muster nichtfluoreszierend ausgebildet ist, oder das Muster ist fluoreszierend ausgebildet, wobei das strömende Fluid keine fluoreszierenden Partikel enthält, oder das strömende Fluid enthält fluoreszierende Partikel und das Muster ist fluoreszierend ausgebildet, wobei die Fluoreszenzwellenlänge der fluoreszierenden Partikel und die des Musters voneinander verschieden sind. Falls das strömende Fluid Tracer oder intrinsische Partikel enthält, können diese entweder als fluoreszierende Partikel in das Fluid eingebracht werden, oder das Fluid weist intrinsisch fluoreszierende Partikel auf, mittels derer die Strömung visualisiert werden kann, so dass der Zusatz von Tracern nicht notwendig ist. Falls das Muster fluoreszierend ausgebildet ist, ist darunter zu verstehen, dass das Material, z. B. der Lack, aus dem das Muster besteht, mindestens einen fluoreszierenden Bestandteil aufweist. "Fluoreszierend" bedeutet dabei, dass die Partikel bzw. mindestens ein Bestandteil des Musters durch Beleuchtung optisch in einen angeregten Zustand versetzt werden und innerhalb kurzer Zeit (Größenordnung etwa ms und kleiner) nach der Anregung unter Emission von Licht relaxieren. Die Wellenlänge des gestreuten Lichts (Fluoreszenzwellenlänge) ist dabei i. d. R. größer als die Wellenlänge der Beleuchtung (stokessche Regel). Es versteht sich, dass der hier verwendete Begriff "Wellenlänge" stets einen gewissen, schmalen Wellenlängenbereich von einigen 10 nm um die Wellenlänge herum einschließt, beispielsweise die natürliche Linienbreite einer Spektrallinie, oder die Linienverbreiterungsmechanismen (z. B. dem Doppler-Effekt aufgrund der thermischen Bewegung) unterliegende Linienbreite des Fluoreszenzlichts.

In der beschriebenen Ausführungsform weist die erfindungsgemäße wellenfrontsensorlose Anordnung eine erste und eine zweite Kamera auf. Im optischen Weg zwischen dem Messfeld und den beiden Kameras sind Mittel zur Wellenlängenselektion angeordnet. Die Mittel zur Wellenlängenselektion sind so ausgestaltet, dass Licht einer ersten Wellenlänge mit einer ersten Kamera und Licht einer zweiten Wellenlänge mit einer zweiten Kamera detektiert wird.

Die beschriebene Ausführungsform erlaubt es auf vorteilhafte Weise, Strömungsbild und Musterbild zu separieren, da die Wellenlänge des an den Tracern des strömenden Fluids gestreuten Lichts und die Wellenlänge des am Muster gestreuten Lichts voneinander verschieden sind. Enthält beispielsweise das strömende Fluid fluoreszierende Partikel, während das Muster nichtfluoreszierend ausgebildet ist, ist die Wellenlänge des an den fluoreszierenden Partikeln gestreuten Lichts i. d. R. größer als die Wellenlänge des am Muster gestreuten Lichts, die der Wellenlänge der Beleuchtung entspricht. Über die Mittel zur Wellenlängenselektion wird o. B. d. A. das Strömungsbild dann auf der ersten Kamera abgebildet, und das Musterbild auf der zweiten. Analoges gilt, wenn das Muster fluoreszierend ausgebildet ist und die Partikel nichtfluoreszierend sind, oder wenn das strömende Fluid fluoreszierende Partikel enthält und das Musterbild fluoreszierend ausgebildet ist, wobei die Fluoreszenzwellenlängen voneinander verschieden sind.

In einer Ausgestaltung der Ausführungsform können die Mittel zur Wellenlängenselektion als Mittel zur teilweisen Reflexion ausgebildet sein, die eine Verspiegelung umfassen, die als wellenlängenabhängiger Strahlteiler wirkt, wobei Licht einer ersten Wellenlänge zu einem überwiegenden Anteil in Richtung der einen Kamera abgelenkt wird und Licht einer zweiten Wellenlänge zu einem überwiegenden Anteil in Richtung der zweiten Kamera abgelenkt wird Die Mittel zur teilweisen Reflexion sind somit z. B. dergestalt ausgebildet, dass Licht der ersten Wellenlänge zu einem überwiegenden Anteil in Richtung der einen Kamera reflektiert wird und Licht der zweiten Wellenlänge zu einem überwiegenden Anteil in Richtung der zweiten Kamera transmittiert wird, oder z. B. dergestalt, dass Licht der ersten Wellenlänge zu einem überwiegenden Anteil in Richtung der ersten Kamera transmittiert und Licht der zweiten Wellenlänge zu einem überwiegenden Anteil in Richtung der zweiten Kamera reflektiert wird.

Vorteilhaft wird bei dieser Ausgestaltung ein großer Teil des gestreuten Lichts zur Abbildung genutzt.

In einer weiteren Ausgestaltung der Ausführungsform können die Mittel zur Wellenlängenselektion einen wellenlängenunabhängig wirkenden Strahlteiler und wellenlängenselektive Filterelemente umfassen. Mittels des wellenlängenunabhängigen Strahlteilers erfolgt zunächst die Aufteilung des an den Tracern oder am Muster gestreuten Lichts unabhängig von seiner Wellenlänge in einen ersten und einen zweiten Anteil mit voneinander verschiedenen Ausbreitungsrichtungen, wobei der erste und der zweite Anteil jeweils sowohl an den Tracern als auch am Muster gestreutes Licht enthalten können. Zwischen dem Strahlteiler und der ersten Kamera sind im optischen Weg des ersten Anteils Filterelemente angeordnet, mittels derer Licht der ersten Wellenlänge die Filterelemente in Richtung der ersten Kamera passieren kann bzw. in Richtung der ersten Kamera abgelenkt wird, wobei Licht der zweiten Wellenlänge die Filterelemente nicht passieren kann bzw. so abgelenkt wird, dass keine Abbildung auf der ersten Kamera erfolgt. Beispielsweise wird auf der ersten Kamera damit nur das Strömungsbild abgebildet. Zwischen dem Strahlteiler und der zweiten Kamera sind im optischen Weg des zweiten Anteils Filterelemente angeordnet, mittels derer Licht der zweiten Wellenlänge die Filterelemente in Richtung der zweiten Kamera passieren kann bzw. in Richtung der zweiten Kamera abgelenkt wird, wobei Licht der ersten Wellenlänge die Filterelemente nicht passieren kann bzw. so abgelenkt wird, dass keine Abbildung auf der zweiten Kamera erfolgt. Im oben angeführten Beispiel bleibend, wird auf der zweiten Kamera dann nur das Musterbild abgebildet.

Diese Ausgestaltung zeichnet sich durch einen besonders einfachen und kostengünstigen Aufbau aus.

In einer weiteren Ausführungsform umfasst der Wellenfrontmodulator der erfindungsgemäßen wellenfrontsensorlosen Anordnung eine Kombination mehrerer adaptiver optischer Korrekturelemente. Beispielsweise können Bildverkippungen durch elektrisch betriebene Galvanometerspiegel und Defokus-Aberrationen durch adaptive Linsen korrigiert werden. Verbleibende optische Störungen können beispielsweise durch einen Flächenlichtmodulator korrigiert werden. Insbesondere werden die einzelnen adaptiven optischen Korrekturelemente in Reihe und durch jeweils einen dem jeweiligen Korrekturelement zugeordneten Regelkreis betrieben.

In einer weiteren Ausführungsform basiert der Wellenfrontmodulator der erfindungsgemäßen wellenfrontsensorlosen Anordnung auf einem Flächenlichtmodulator mit reflektierender beleuchteter Oberfläche. Bevorzugt umfasst der reflektierende Flächenlichtmodulator einen deformierbaren Spiegel mit kontinuierlicher beleuchteter Oberfläche oder ein Array von Mikrospiegeln, die einzeln ausrichtbar sind.

In einer weiteren Ausführungsform der erfindungsgemäßen wellenfrontsensorlosen Anordnung weist die Signalverarbeitungsplattform ein FPGA (field programmable gate array) oder einen Grafikprozessor oder einen digitalen Signalprozessor oder eine Kombination aus diesen auf. Diese Komponenten des digitalen Regelungssystems zeichnen sich vorteilhaft durch geringe Latenzzeiten aus. Um möglichst einen Echtzeitbetrieb für die Störungskorrektur zu erzielen, muss die Regelrate der Ansteuerung des Wellenfrontmodulators mindestens doppelt so hoch wie die maximal auftretende Fluktuationsfrequenz der optischen Störung sein.

Das erfindungsgemäße Verfahren zur wellenfrontsensorlosen Korrektur optischer Störungen durch eine Grenzfläche in bildgebenden Strömungsmessverfahren zur Vermessung eines strömenden Fluids, wobei das strömende Fluid Tracer enthält, die als Streupartikel ausgebildet sind, und wobei in dem durch eine Beleuchtungsquelle beleuchteten Messfeld, das von dem strömenden Fluid durchströmt wird, ein ortsfestes optisches Muster angeordnet ist, ist dadurch gekennzeichnet, dass das strömende Fluid mit einer Beleuchtungsquelle beleuchtet wird, die Ansteuerung eines Wellenfrontmodulators, der im optischen Weg zwischen Messfeld und einer Kamera oder im optischen Weg zwischen der Beleuchtungsquelle und dem Messfeld oder im optischen Weg zwischen der Beleuchtungsquelle und dem Messfeld sowie zwischen dem Messfeld und der Kamera angeordnet ist, wobei die Kamera zumindest zur Aufnahme des Strömungsbilds als störungsbehaftete Abbildung des von den Tracern im strömenden Fluid gestreuten Lichts und des Musterbilds als störungsbehaftete Abbildung des von dem ortsfesten Muster gestreuten Lichts dient, angeordnet ist, durch eine Signalverarbeitungsplattform dergestalt erfolgt, dass ein durch Vergleich des Musterbilds mit dem Muster ermittelter Gütefaktor iterativ optimiert wird.

Im Zuge dessen, dass die Ausrichtung des Wellenfrontmodulators so vorgenommen wird, dass das Musterbild korrigiert wird und Störungen durch die Grenzfläche im Musterbild bevorzugt weitgehend kompensiert werden, wird auch das Strömungsbild korrigiert und diese Störungen im Strömungsbild bevorzugt weitgehend kompensiert.

Ein solches erfindungsgemäßes wellenfrontsensorloses Verfahren kann beispielsweise die folgenden Verfahrensschritte aufweisen:
a. Beleuchtung des Messfelds, das von dem Tracer aufweisenden strömenden Fluid durchströmt wird und in dem ein ortsfestes Hintergrundmuster angeordnet ist;
b. Streuung des Lichts an den Tracern und am ortsfesten Hintergrundmuster,
c. Wechselwirkung des von den Tracern und des von dem Hintergrundmuster gestreuten Lichts mit dem Wellenfrontmodulator;
d. Aufnahme des Strömungsbilds als störungsbehaftete Abbildung des von den Tracern gestreuten Lichts und des Musterbilds als störungsbehaftete Abbildung des von dem ortsfesten Muster gestreuten Lichts mittels der Kamera, wobei die Beleuchtung und/oder die Beobachtung des strömenden Mediums und des Hintergrundmusters durch eine Grenzfläche erfolgt;
e. Separation von Strömungsbild und Musterbild mittels der Signalverarbeitungsplattform;
f. Ermittlung eines Gütefaktors der Abbildung durch Vergleich des Musterbilds mit dem tatsächlichen Hintergrundmuster mittels der Signalverarbeitungsplattform;
g. Ansteuerung des Wellenfrontmodulators zu dessen Ausrichtung mittels der Signalverarbeitungsplattform;
h. Wiederholung der Verfahrensschritte a. bis g. mit dem Ziel der Optimierung des Gütefaktors, also der Minimierung der Abweichung des Musterbilds vom tatsächlichen Hintergrundmuster.

Zur Optimierung können eine Vielzahl von geeigneten, dem Fachmann bekannten Algorithmen angewendet werden; beispielhaft seien die lineare Suche oder ein generischer Algorithmus genannt.

Erfindungsgemäß beschriebene Merkmale und Details der wellenfrontsensorlosen Anordnung gelten selbstverständlich auch im Zusammenhang mit dem erfindungsgemäßen Verfahren zur wellenfrontsensorlosen Korrektur optischer Störungen und umgekehrt.

Bei der erfindungsgemäßen wellenfrontsensorbasierten Anordnung zur Korrektur optischer Störungen durch eine Grenzfläche in bildgebenden Strömungsmessverfahren zur Vermessung eines strömenden Fluids enthält das strömende Fluid Tracer, die als fluoreszierende Partikel ausgebildet sind. Das heißt, entweder werden in das Fluid zu seiner Vermessung fluoreszierende Partikel eingebracht, oder das Fluid weist intrinsisch fluoreszierende Partikel auf, mittels derer die Strömung visualisiert werden kann, so dass der Zusatz von Tracern nicht notwendig ist.

Die erfindungsgemäße wellenfrontsensorbasierte Anordnung weist mindestens eine Beleuchtungsquelle, z. B. einen Laser, auf, mittels derer ein Messfeld und damit das strömende Fluid durch eine optische Störungen verursachende Grenzfläche mit Licht mindestens einer Beleuchtungswellenlänge beleuchtet wird.

Des Weiteren weist die erfindungsgemäße wellenfrontsensorbasierte Anordnung einen Wellenfrontsensor auf, der zur Detektion des von der Grenzfläche gemäß der fresnelschen Formeln reflektierten Lichts ausgebildet ist, wobei dieses Licht die mindestens eine Beleuchtungswellenlänge aufweist. Für die Anwendbarkeit der fresnelschen Formeln müssen die Grenzflächen optisch eben, kontinuierlich und großskalig ausgebildet sein. Als "Wellenfrontsensor" ist dabei eine Anordnung zu verstehen, mit deren Hilfe eine Wellenflächenprüfung zur Ermittlung der Gestalt der Flächen gleicher Phase einer Welle durchgeführt werden kann. Mittels des Wellenfrontsensors können Deformationen der Wellenfront instantan ermittelt werden kann.

Die erfindungsgemäße wellenfrontsensorbasierte Anordnung weist außerdem eine Kamera auf, mittels derer das Strömungsbild aufgenommen wird, wobei das Strömungsbild die störungsbehaftete Abbildung des von den Tracern des strömenden Fluids gestreuten Lichts darstellt, wobei dieses Licht eine von der mindestens einen Beleuchtungswellenlänge verschiedene Wellenlänge aufweist. Daher sind die Tracer im Falle einer wellenfrontsensorbasierten Anordnung bevorzugt als fluoreszierende Partikel ausgebildet.

Zur Trennung dieser beiden Lichtanteile mit voneinander verschiedenen Wellenlängen sind im optischen Weg zwischen dem Messfeld und dem Wellenfrontsensor sowie zwischen dem Messfeld und der Kamera Mittel zur teilweisen Reflexion angeordnet, wobei diese Mittel eine auch als "dichroitisch" bezeichnete Verspiegelung aufweisen, deren Reflexions- und Transmissionsgrad eine Funktion der Wellenlänge des Lichts ist und die dadurch als wellenlängenabhängiger Strahlteiler wirkt. Diese Mittel zur teilweisen Reflexion wirken so, dass Licht der mindestens einen Beleuchtungswellenlänge, insbesondere das von der Grenzfläche reflektierte Licht, zu einem überwiegenden Anteil in Richtung des Wellenfrontsensors abgelenkt wird, und Licht einer von der mindestens einen Beleuchtungswellenlänge verschiedenen Wellenlänge, insbesondere das von den fluoreszierenden Partikeln gestreute Licht, zu einem überwiegenden Anteil in Richtung der Kamera abgelenkt wird. Beispielsweise wirken die Mittel zur teilweisen Reflexion so, dass Licht der mindestens einen Beleuchtungswellenlänge zu einem überwiegenden Anteil in Richtung des Wellenfrontsensors reflektiert und Licht einer von der mindestens einen Beleuchtungswellenlänge verschiedenen Wellenlänge zu einem überwiegenden Anteil in Richtung der Kamera transmittiert wird. Oder diese Mittel wirken so, dass Licht der mindestens einen Beleuchtungswellenlänge zu einem überwiegenden Anteil in Richtung des Wellenfrontsensors transmittiert und Licht einer von der mindestens einen Beleuchtungswellenlänge verschiedenen Wellenlänge zu einem überwiegenden Anteil in Richtung der Kamera reflektiert wird.

In einer weiteren bevorzugten Ausführungsform enthält das strömende Fluid Streupartikel, wobei das von dem strömenden Fluid durchströmte Messfeld mit Licht einer ersten Beleuchtungsquelle mit einer Beleuchtungswellenlänge durch die Grenzfläche beleuchtet wird und die Streupartikel mit Licht einer zweiten Beleuchtungsquelle mit einer von der Beleuchtungswellenlänge verschiedenen Wellenlänge beleuchtet werden. Dabei ist die Kamera zur Aufnahme des Strömungsbilds als Abbildung des von den Streupartikeln des strömenden Fluids gestreuten Lichts der von der Beleuchtungswellenlänge verschiedenen Wellenlänge ausgebildet. Die zwischen dem Messfeld und der Kamera angeordneten Mittel zur teilweisen Reflexion sind dabei als Strahlteiler ausgebildet. Die erfindungsgemäße wellenfrontsensorbasierte Anordnung weist des Weiteren einen ansteuerbaren Wellenfrontmodulator auf, der im optischen Weg zwischen dem Messfeld und der Kamera sowie zwischen dem Messfeld und dem Wellenfrontsensor oder im optischen Weg zwischen der mindestens einen Beleuchtungsquelle und dem Messfeld oder im optischen Weg zwischen der mindestens einen Beleuchtungsquelle und dem Messfeld sowie zwischen dem Messfeld und der Kamera sowie zwischen dem Messfeld und dem Wellenfrontsensor angeordnet ist. Vorzugsweise ist der ansteuerbare Wellenfrontmodulator im optischen Weg zwischen dem Messfeld und der Kamera sowie zwischen dem Messfeld und dem Wellenfrontsensor angeordnet.

Außerdem weist die erfindungsgemäße wellenfrontsensorbasierte Anordnung mindestens eine Signalverarbeitungsplattform auf, die zumindest der Auswertung der mittels des Wellenfrontsensors detektierten Daten mit dem Ziel, die Wellenfrontverzerrung aufgrund der optischen Störung durch die Grenzfläche zu ermitteln, sowie der Ansteuerung des Wellenfrontmodulators ausgebildet ist. Zu diesem Zweck ist die Signalverarbeitungsplattform informationstechnisch zumindest mit dem Wellenfrontsensor und mit dem Wellenfrontmodulator verbunden, wobei die informationstechnische Verbindung drahtgestützt oder drahtlos ausgeführt sein kann. Die Ansteuerung des Wellenfrontmodulators erfolgt durch die Signalverarbeitungsplattform dergestalt, dass durch Wechselwirkung mit dem Wellenfrontmodulator, im Wesentlichen Transmission und/oder Reflexion, die durch Streuungen der Grenzfläche verursachte Wellenfrontverzerrung korrigiert, bevorzugt weitgehend kompensiert, wird. Beispielsweise kann der Wellenfrontmodulator so ausgerichtet werden, dass dem Licht bei Wechselwirkung mit dem Wellenfrontmodulator das Inverse der mittels des Wellenfrontsensors gemessenen Wellenfrontverzerrung aufgeprägt wird. Bevorzugt wird die Signalverarbeitungsplattform auch zur Auswertung des Strömungsbilds genutzt; die Auswertung des Strömungsbilds kann jedoch auch auf einer zweiten Signalverarbeitungsplattform durchgeführt werden.

Neben den genannten Komponenten kann die erfindungsgemäße wellenfrontsensorbasierte Anordnung auch weitere, in zweckmäßiger Weise angeordnete optische Komponenten, insbesondere weitere Strahlteiler, Reflexionsprismen und/oder Filterelemente, aufweisen.

Die erfindungsgemäße wellenfrontsensorbasierte Anordnung arbeitet als geschlossener Regelkreis. Um die Regelung bevorzugt in Echtzeit durchführen zu können, ist die Aktualisierungsrate des Regelkreises mindestens doppelt so groß wie die maximale Fluktuationsfrequenz, mit der sich die optische Störung durch die Grenzfläche ändert, einzustellen.

Vorteilhaft erlaubt die erfindungsgemäße wellenfrontsensorbasierte Anordnung die instantane, hardwareseitige Korrektur optischer Störungen durch eine Grenzfläche ohne ein potentiell aufwändiges und zeitraubendes Iterationsverfahren. Ein weiterer Vorteil der wellenfrontsensorbasierten Anordnung besteht darin, dass ein eindeutiges Ergebnis für die Ansteuerung des Wellenfrontmodulators erzielt wird, wohingegen die Anwendung von Iterationsverfahren potentiell auch zur Ermittlung mehrerer Lösungen führen kann.

In einer Ausführungsform der erfindungsgemäßen wellenfrontsensorbasierten Anordnung umfasst der Wellenfrontsensor einen Sensor vom Hartmann-Shack-Typ, mittels dessen die Phaseninformation des an der Grenzfläche reflektierten Lichts der mindestens einen Beleuchtungswellenlänge in eine messbare Intensitätsverteilung umgewandelt wird. Ein Hartmann-Shack-Sensor besteht im Allgemeinen aus einer Mikrolinsenmatrix und einem ortsauflösenden Detektor. Die Position des von jeder Mikrolinse erzeugten Punktbilds auf dem Detektor gibt Aufschluss über die lokale Neigung der Wellenfront. Aus der Gesamtheit aller Punktbilder kann die Wellenfront rekonstruiert und so eine mögliche Verzerrung der Wellenfront bestimmt werden.

In einer weiteren Ausführungsform der erfindungsgemäßen wellenfrontsensorbasierten Anordnung umfasst der Wellenfrontsensor eine Anordnung zur Durchführung von holographischen Messungen. Durch den Wellenfrontsensor detektiert wird dabei die räumliche Intensitätsverteilung eines Interferenzmusters, das durch kohärente Überlagerung des von der Grenzfläche reflektierten Lichts der Beleuchtungswellenlänge mit einer Referenzwelle entsteht. Besonders bevorzugt wird die Referenzwelle durch Strahlteilung des von der Beleuchtungsquelle emittierten Lichts erzeugt. Vorteilhaft bietet die Holografie die Möglichkeit, schnell und ohne aufwändige Iterationen insbesondere die Phasendeformation des von der Grenzfläche reflektierten Lichts zu bestimmen.

In einer weiteren Ausführungsform umfasst der Wellenfrontmodulator der erfindungsgemäßen wellenfrontsensorbasierten Anordnung eine Kombination mehrerer adaptiver optischer Korrekturelemente. Beispielsweise können Bildverkippungen durch elektrisch betriebene Galvanometerspiegel und Defokus-Aberrationen durch adaptive Linsen korrigiert werden. Verbleibende optische Störungen können beispielsweise durch einen Flächenlichtmodulator korrigiert werden. Insbesondere werden die einzelnen adaptiven optischen Korrekturelemente in Reihe und durch jeweils einen dem jeweiligen Korrekturelement zugeordneten Regelkreis betrieben.

In einer weiteren Ausführungsform basiert der Wellenfrontmodulator der erfindungsgemäßen wellenfrontsensorbasierten Anordnung auf einem Flächenlichtmodulator mit reflektierender beleuchteter Oberfläche. Bevorzugt umfasst der reflektierende Flächenlichtmodulator einen deformierbaren Spiegel mit kontinuierlicher beleuchteter Oberfläche oder ein Array von Mikrospiegeln, die einzeln ausrichtbar sind.

In einer weiteren Ausführungsform der erfindungsgemäßen wellenfrontsensorbasierten Anordnung weist die Signalverarbeitungsplattform einen FPGA (field programmable gate array) oder einen Grafikprozessor oder einen digitalen Signalprozessor oder eine Kombination aus diesen auf. Diese Komponenten des digitalen Regelungssystems zeichnen sich vorteilhaft durch geringe Latenzzeiten aus. Um möglichst einen Echtzeitbetrieb für die Störungskorrektur zu erzielen, sollte die Regelrate der Ansteuerung des Wellenfrontmodulators mindestens doppelt so hoch wie die maximal auftretende Fluktuationsfrequenz der optischen Störung sein.

In einer weiteren Ausführungsform der erfindungsgemäßen wellenfrontsensorbasierten Anordnung emittiert die Beleuchtungsquelle mindestens zwei voneinander verschiedene Wellenlängen zur Beleuchtung des strömenden Fluids, oder die erfindungsgemäße wellenfrontsensorbasierte Anordnung weist mindestens zwei Beleuchtungsquellen auf, die jeweils voneinander verschiedene Wellenlängen zur Beleuchtung des strömenden Fluids emittieren. Aus diesen mindestens zwei Wellenlängen kann eine "synthetische Wellenlänge" berechnet werden, die größer als jede der mindestens zwei Wellenlängen ist, wodurch der Eindeutigkeitsbereich der Wellenfrontprüfung vergrößert wird. Das an der Grenzfläche reflektierte Licht mit mindestens zwei voneinander verschiedenen Wellenlängen wird überlagert und mittels des Wellenfrontsensors analog dem aus dem Stand der Technik als "absolute Distanzinterferometrie" bekannten Verfahren die Wellenfrontverzerrung aufgrund der optischen Störung durch die Grenzfläche als absoluter Phasenhub ermittelt. Die Ausrichtung des Wellenfrontmodulators erfolgt dann im Hinblick auf die Messung des absoluten Phasenhubs. Besonders vorteilhaft ist diese Ausführungsform bei der Betrachtung unstetiger Störungen, wie sie beispielsweise von rauen Grenzflächen verursacht werden.

Beim wellenfrontsensorbasierten Verfahren zur Kompensation optischer Störungen durch eine Grenzfläche in bildgebenden Strömungsmessverfahren zur Vermessung eines strömenden Fluids enthält das strömende Fluid Tracer, die als fluoreszierende Partikel ausgebildet sind, wobei diese entweder als Tracer in das Fluid eingebracht werden, oder das Fluid intrinsisch fluoreszierende Partikel aufweist. Das erfindungsgemäße Verfahren umfasst zumindest die folgenden Verfahrensschritte:
a. Beleuchtung eines Messfelds und damit des strömenden Fluids durch die Grenzfläche mit Licht mindestens einer Beleuchtungswellenlänge und Wechselwirkung des strömenden Fluids mit dem Licht mindestens einer Beleuchtungswellenlänge, wobei das Licht nach Reflexion gemäß der fresnelschen Formeln an der Grenzfläche die mindestens eine Beleuchtungswellenlänge aufweist und nach Streuung an den fluoreszierenden Partikeln des strömenden Fluids eine von der mindestens einen Beleuchtungswellenlänge verschiedene Wellenlänge;
b. Trennung der Gesamtheit des von der Grenzfläche reflektierten Lichts und des von den fluoreszierenden Partikeln gestreuten Lichts in Abhängigkeit von der Wellenlänge in einen die mindestens eine Beleuchtungswellenlänge aufweisenden Anteil und einen eine von der mindestens einen Beleuchtungswellenlänge verschiedene Wellenlänge aufweisenden Anteil;
c. Ablenkung des die mindestens eine Beleuchtungswellenlänge aufweisenden Anteils in Richtung eines Wellenfrontsensors, Detektion des die mindestens eine Beleuchtungswellenlänge aufweisenden Anteils mittels des Wellenfrontsensors und Auswertung der detektierten Daten mittels einer Signalverarbeitungsplattform zur Ermittlung einer Wellenfrontverzerrung;
d. Ablenkung des eine von der mindestens einen Beleuchtungswellenlänge verschiedene Wellenlänge aufweisenden Anteils in Richtung einer Kamera und Abbildung des Strömungsbilds auf der Kamera;
e. Auswertung des Strömungsbilds mittels der einen oder einer zweiten Signalverarbeitungsplattform;
wobei eine Wechselwirkung des von der Grenzfläche reflektierten Lichts und des von den fluoreszierenden Partikeln gestreuten Lichts oder des zur Beleuchtung des strömenden Fluids dienenden Lichts oder des zur Beleuchtung des strömenden Fluids dienenden Lichts sowie des von der Grenzfläche reflektierten und des von den fluoreszierenden Partikeln gestreuten Lichts mit einem ansteuerbaren Wellenfrontmodulator erfolgt, und der Wellenfrontmodulator mittels der Signalverarbeitungsplattform dergestalt zu dessen Ausrichtung angesteuert wird, dass durch Wechselwirkung mit dem Wellenfrontmodulator die Wellenfrontverzerrung korrigiert wird.

Das erfindungsgemäße wellenfrontsensorbasierte Verfahren kann dabei beispielweise folgendermaßen ablaufen:
i. Beleuchtung des Messfeld und damit des strömenden Fluids durch die Grenzfläche mit Licht mindestens einer Beleuchtungswellenlänge und Wechselwirkung des strömenden Fluids mit dem Licht mindestens einer Beleuchtungswellenlänge, wobei das Licht nach Reflexion an der Grenzfläche die mindestens eine Beleuchtungswellenlänge aufweist und nach Streuung an den fluoreszierenden Partikeln des strömenden Fluids eine von der mindestens einen Beleuchtungswellenlänge verschiedene Wellenlänge;
ii. Wechselwirkung des von der Grenzfläche reflektierten Lichts und des von den fluoreszierenden Partikeln gestreuten Lichts mit einem ansteuerbaren Wellenfrontmodulator;
iii. Trennung der Gesamtheit des von der Grenzfläche reflektierten Lichts und des von den fluoreszierenden Partikeln gestreuten Lichts in Abhängigkeit von der Wellenlänge in einen die mindestens eine Beleuchtungswellenlänge aufweisenden Anteil und einen eine von der mindestens einen Beleuchtungswellenlänge verschiedene Wellenlänge aufweisenden Anteil;
iv. Ablenkung des die mindestens eine Beleuchtungswellenlänge aufweisenden Anteils in Richtung eines Wellenfrontsensors, Detektion des die mindestens eine Beleuchtungswellenlänge aufweisenden Anteils mittels des Wellenfrontsensors und Auswertung der detektierten Daten mittels einer Signalverarbeitungsplattform zur Ermittlung einer Wellenfrontverzerrung;
v. Ablenkung des eine von der mindestens einen Beleuchtungswellenlänge verschiedene Wellenlänge aufweisenden Anteils in Richtung einer Kamera und Abbildung des Strömungsbilds auf der Kamera;
vi. Einstellung des ansteuerbaren Wellenfrontmodulators mittels der Signalverarbeitungsplattform dergestalt, dass durch Wechselwirkung mit dem Wellenfrontmodulator die Wellenfrontverzerrung kompensiert wird;
vii. Auswertung des Strömungsbilds mittels der einen oder einer zweiten Signalverarbeitungsplattform.

Ein anderer möglicher Ablauf des erfindungsgemäßen wellenfrontsensorbasierten Verfahrens ist beispielweise folgendermaßen:
i'. Wechselwirkung des zur Beleuchtung des strömenden Fluids dienenden Lichts mindestens einer Beleuchtungswellenlänge mit einem ansteuerbaren Wellenfrontmodulator;
ii'. Beleuchtung des Messfelds und damit des strömenden Fluids durch die Grenzfläche mit dem Licht mindestens einer Beleuchtungswellenlänge und Wechselwirkung des strömenden Fluids mit dem Licht mindestens einer Beleuchtungswellenlänge, wobei das Licht nach Reflexion an der Grenzfläche die mindestens eine Beleuchtungswellenlänge aufweist und nach Streuung an den fluoreszierenden Partikeln des strömenden Fluids eine von der mindestens einen Beleuchtungswellenlänge verschiedene Wellenlänge;
iii'. Trennung der Gesamtheit des von der Grenzfläche reflektierten Lichts und des von den fluoreszierenden Partikeln gestreuten Lichts in Abhängigkeit von der Wellenlänge in einen die mindestens eine Beleuchtungswellenlänge aufweisenden Anteil und einen eine von der mindestens einen Beleuchtungswellenlänge verschiedene Wellenlänge aufweisenden Anteil;
iv'. Ablenkung des die mindestens eine Beleuchtungswellenlänge aufweisenden Anteils in Richtung eines Wellenfrontsensors, Detektion des die mindestens eine Beleuchtungswellenlänge aufweisenden Anteils mittels des Wellenfrontsensors und Auswertung der detektierten Daten mittels einer Signalverarbeitungsplattform zur Ermittlung einer Wellenfrontverzerrung;
v'. Ablenkung des eine von der mindestens einen Beleuchtungswellenlänge verschiedene Wellenlänge aufweisenden Anteils in Richtung einer Kamera und Abbildung des Strömungsbilds auf der Kamera;
vi'. Einstellung des ansteuerbaren Wellenfrontmodulators mittels der Signalverarbeitungsplattform dergestalt, dass durch Wechselwirkung mit dem Wellenfrontmodulator die Wellenfrontverzerrung kompensiert wird;
vii'. Auswertung des Strömungsbilds mittels der einen oder einer zweiten Signalverarbeitungsplattform.

Die beschriebenen möglichen Abläufe des erfindungsgemäßen wellenfrontsensorbasierten Verfahrens können auch miteinander kombiniert werden, so dass sowohl eine Wechselwirkung des zur Beleuchtung des strömenden Fluids dienenden Lichts sowie des von der Grenzfläche reflektierten und des von den fluoreszierenden Partikeln gestreuten Lichts mit dem ansteuerbaren Wellenfrontmodulator erfolgt.

Insbesondere kann das erfindungsgemäße Verfahren auch so angewendet werden, dass das Messfeld mit mindestens zwei Beleuchtungswellenlängen beleuchtet und in Analogie zum aus dem Stand der Technik bekannten Verfahren der "absoluten Distanzinterferometrie" mittels des Wellenfrontsensors der absolute Phasenhub der Störung ermittelt und zur Ausrichtung des Wellenfrontmodulators genutzt werden kann.

Erfindungsgemäß beschriebene Merkmale und Details der wellenfrontsensorbasierten Anordnung gelten selbstverständlich auch im Zusammenhang mit dem erfindungsgemäßen Verfahren zur wellenfrontsensorbasierten Korrektur optischer Störungen und umgekehrt.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Die Erfindung wird im Folgenden durch Ausführungsbeispiele anhand von Figuren erläutert, ohne auf diese beschränkt zu sein.

### Dabei zeigt

Fig. 1 eine schematische Darstellung einer wellenfrontsensorlosen Anordnung zur Korrektur optischer Störungen durch eine Grenzfläche in einem bildgebenden Strömungsmessverfahren,
Fig. 2 eine schematische Darstellung eines weiteren Ausführungsbeispiels einer wellenfrontsensorlosen Anordnung zur Korrektur optischer Störungen durch eine Grenzfläche in einem bildgebenden Strömungsmessverfahren, wobei das strömende Fluid Partikel enthält, und
Fig. 3 eine schematische Darstellung einer wellenfrontsensorbasierten Anordnung zur Korrektur optischer Störungen durch eine Grenzfläche in einem bildgebenden Strömungsmessverfahren.

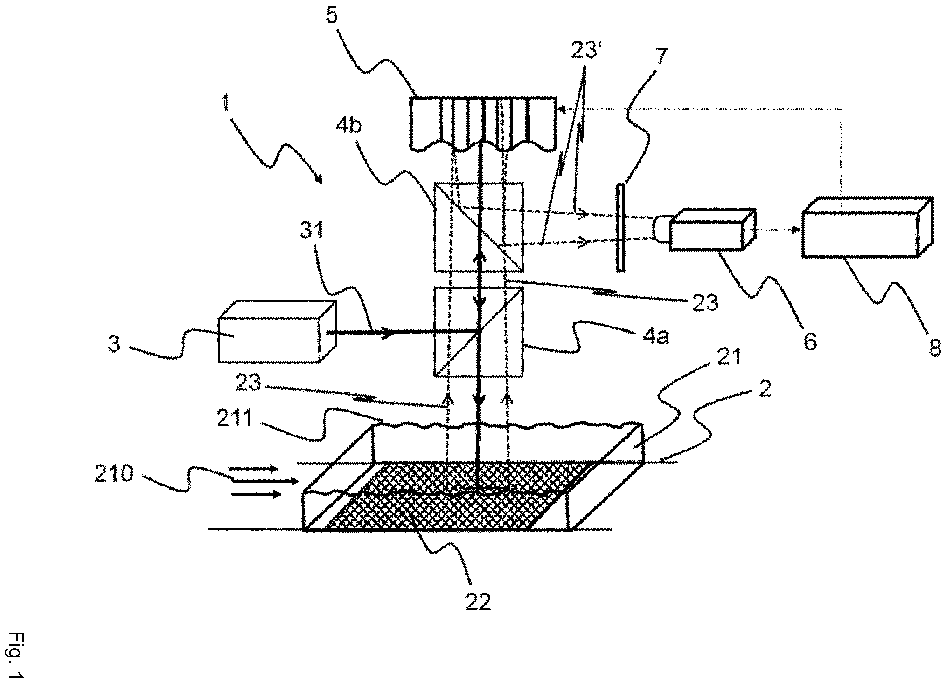

In Fig. 1 ist ein Ausführungsbeispiel einer wellenfrontsensorlosen Anordnung 1 zur Korrektur optischer Störungen durch eine fluktuierende Grenzfläche 211 in einem bildgebenden Strömungsmessverfahren dargestellt. Einen Strömungskanal 2 durchströmt in Strömungsrichtung 210 ein Fluid 21, wobei das Fluid 21 eine offene Grenzfläche 211 zur Umgebung hin aufweist. Durch Streuung an der offenen Grenzfläche 211 wird daher eine fluktuierende optische Störung hervorgerufen. Zur Vermessung mittels eines bildgebenden Strömungsmessverfahrens enthält das Fluid 21 Streupartikel (nicht dargestellt). An der Unterseite des Strömungskanals 2 ist ein Muster 22 auf ortsfeste Weise angeordnet.

Die Beleuchtungsquelle 3 emittiert das Beleuchtungslicht 31, welches über einen Strahlteiler 4a und einen weiteren Strahlteiler 4b zu einem Flächenlichtmodulator 5 gelenkt und von diesem in Richtung des Strömungskanals 2 reflektiert wird, so dass das strömende Fluid 21 und das Muster 22 durch die Grenzfläche 211 hindurch beleuchtet werden. Im Ausführungsbeispiel stellt das Messfeld den beleuchteten Bereich des Strömungskanals 2 dar. Durch Reflexion am Flächenlichtmodulator 5 wird entsprechend der Ausrichtung der Elemente des Flächenlichtmodulators 5 der Wellenfront des Lichts eine definierte Verzerrung (im Folgenden jeweils repräsentiert durch ein Apostroph in der Bezeichnung der Lichtanteile) aufgeprägt. Die Gesamtheit des an den Streupartikeln in dem strömenden Fluid 21 und am Muster 22 gestreuten Lichts 23 wird nach Transmission durch die Strahlteiler 4a, 4b ebenfalls am Flächenlichtmodulator 5 und dann vom Strahlteiler 4b in Richtung der Kamera 6 reflektiert. Vor der Kamera 6 ist ein Wellenlängenbandpass 7 angeordnet, der nur gestreutes Licht 23' eines schmalen Wellenlängenbereichs um die Wellenlänge des Beleuchtungslichts 31 durchlässt, um unerwünschte Hintergrundstrahlung, die nicht aus Streuung an dem strömenden Fludi 21 oder dem Muster 22 resultiert, herauszufiltern. Mittels der Kamera 6 wird sowohl das Strömungsbild, also die Abbildung des von den Streupartikeln in dem strömenden Fluid 21 gestreuten Lichts 23', als auch das Musterbild, also die Abbildung des von dem Muster 22 gestreuten Lichts 23', detektiert. Die Auswertung des Strömungsbilds und des Musterbilds sowie die Ansteuerung des Flächenlichtmodulators 5 erfolgt mit der Signalverarbeitungsplattform 8, die mit der Kamera 6 und mit dem Flächenlichtmodulator 5 informationstechnisch verbunden ist (angedeutet durch Strich-Punkt-Linien in Fig. 1). Bei der Signalverarbeitungsplattform 8 kann es sich um einen PC oder einen FPGA mit den entsprechenden Schnittstellen handeln.

Mittels der Signalverarbeitungsplattform 8 wird zunächst das Strömungsbild vom Musterbild separiert, beispielsweise mittels einer linearen Suche. Dann wird das durch Streuung an der Grenzfläche 211 deformierte Musterbild mit dem Muster 22 als idealem Zielbild verglichen, wobei ein Gütefaktor, der z. B. die Abweichung des Musterbilds vom Muster22 repräsentiert, errechnet wird. Als Gütefaktor dient beispielsweise der normierte Kreuzkorrelationskoeffizient von Musterbild und Muster, wobei sich der Gütefaktor per definitionem mit sinkender Abweichung zwischen Musterbild und Muster dem Wert 1 annähert, wobei dem Wert 1 die Übereinstimmung von Musterbild und Muster entspricht.

Die Signalverarbeitungsplattform 8 ist mit dem Flächenlichtmodulator 5 informationstechnisch verbunden und steuert die Ausrichtung der Elemente, die dessen reflektierende Oberfläche bilden, z. B. einer Vielzahl einzeln ansteuerbarer Mikrospiegel. Die Elemente des Flächenlichtmodulators 5 werden von der Signalverarbeitungsplattform 8 angesteuert und ihre Ausrichtung iterativ variiert mit dem Ziel, dass der Gütefaktor unter Wiederholung des beschriebenen Verfahrens von der Beleuchtung des strömenden Fluids 21 und des Musters 22 bis zur Ermittlung des Gütefaktors und Ausrichtung des Flächenlichtmodulators 5 steigt. Die iterative Optimierung ist abgeschlossen, wenn der Gütefaktor ein Maximum erreicht oder einen vorbestimmten Grenzwert überschritten hat. Aufgrund des fluktuierenden Charakters der durch die offene Grenzfläche 211 hervorgerufenen Störung läuft die Optimierung im Wesentlichen fortlaufend ab. Um die Störungskorrektur in Echtzeit ausführen zu können, muss der Optimierungsvorgang sowie die Ausrichtung des Flächenlichtmodulators 5 hinreichend schnell durchgeführt werden. Insbesondere sollte die Regelrate der Anordnung 1 mindestens das Doppelte der maximal auftretenden Fluktuationsfrequenz der Störung betragen.

Durch die Ausrichtung des Flächenlichtmodulators 5 zur Optimierung des Musterbilds erfolgt auch die Korrektur der Störung durch die offene Grenzfläche 211 bezüglich des Strömungsbilds. Das korrigierte Strömungsbild kann entweder mit der Signalverarbeitungsplattform 8 oder einer anderen Signalverarbeitungsplattform zur Ermittlung der Strömungsparameter über die bekannten Verfahren, wie PIV, PTV, MTV, genutzt werden.

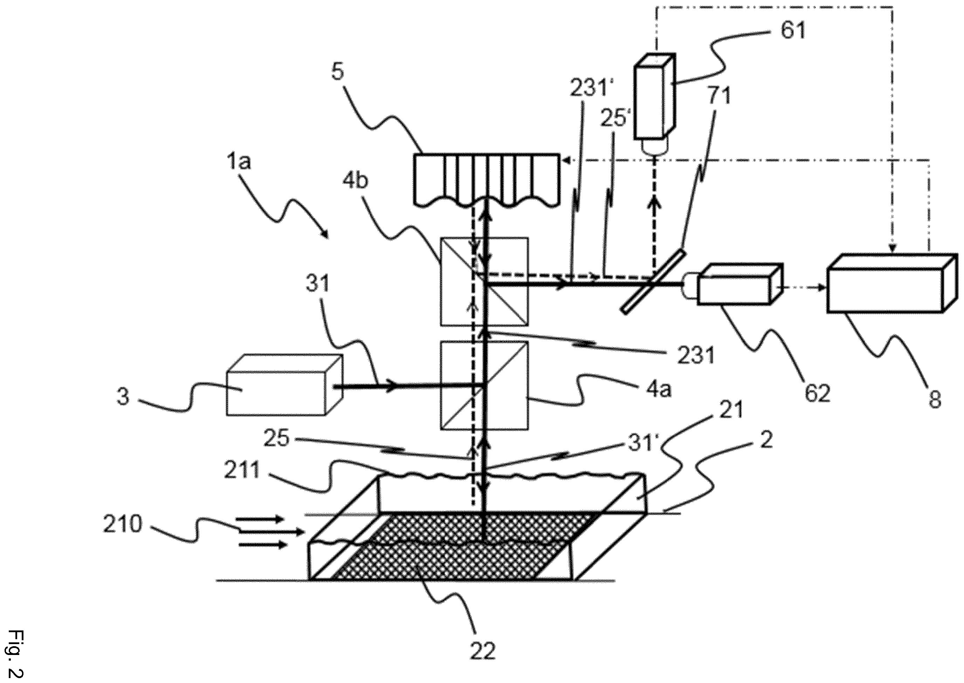

In Fig. 2 ist ein weiteres Ausführungsbeispiel einer wellenfrontsensorlosen Anordnung 1a zur Korrektur optischer Störungen durch eine fluktuierende Grenzfläche 211 in einem bildgebenden Strömungsmessverfahren dargestellt. Wie in Fig. 1 durchströmt ein Fluid 21 einen Strömungskanal 2 in Strömungsrichtung 210, wobei das Fluid 21 eine offene Grenzfläche 211 zur Umgebung hin aufweist. Durch Streuung an der offenen Grenzfläche 211 wird daher eine fluktuierende optische Störung hervorgerufen. Das Fluid 21 enthält fluoreszierende Partikel (nicht dargestellt), während das an der Unterseite des Strömungskanals 2 ortsfest angeordnete Muster 22 nichtfluoreszierend ausgebildet ist.

Wie in Fig. 1 emittiert die Beleuchtungsquelle 3 das Beleuchtungslicht 31, welches eine Beleuchtungswellenlänge λ₁ aufweist. Das Beleuchtungslicht 31 wird über einen Strahlteiler 4a und einen weiteren Strahlteiler 4b zu einem Flächenlichtmodulator 5 gelenkt und von diesem in Richtung des Strömungskanals 2 reflektiert, so dass das strömende Fluid 21 und das Muster 22 durch die Grenzfläche 211 hindurch mit Beleuchtungslicht 31' der Beleuchtungswellenlänge λ₁ beleuchtet werden. Durch Reflexion am Flächenlichtmodulator 5 wird entsprechend der Ausrichtung der Elemente des Flächenlichtmodulators 5 der Wellenfront des Lichts eine definierte Verzerrung (im Folgenden jeweils repräsentiert durch ein Apostroph in der Bezeichnung der Lichtanteile) aufgeprägt.

Ein Anteil des Beleuchtungslichts 31' wird am ortsfesten Muster 22 gestreut und erfährt dabei keine Wellenlängenänderung.

Ein anderer Anteil des Beleuchtungslichts 31' wird von den fluoreszierenden Partikeln in dem strömenden Fluid 21 gestreut. Nach Streuung an den fluoreszierenden Partikeln weist das gestreute Licht 25 die Wellenlänge λ₂ auf, die i. d. R. verschieden von λ₁ und gemäß der stokesschen Regel größer als λ₁ ist.

Das am Muster 22 gestreute Licht 231 mit λ₁ und das im Folgenden als Fluoreszenz-Licht bezeichnete, an den Partikeln gestreute Licht 25 werden durch die beiden Strahlteiler 4a und 4b zum Flächenlichtmodulator 5 transmittiert. Nach der Reflexion am Flächenichtmodulator 5 erfolgt eine Umlenkung des am Muster22 gestreuten Lichts 231' und des Fluoreszenz-Lichts 25' mittels des Strahlteilers 4b in Richtung eines dichroitischen Filters 71. Der dichroitische Filter 71 weist eine Verspiegelung auf, deren Reflexionsgrad eine Funktion der Wellenlänge des Lichts ist, so dass die Verspiegelung als wellenlängenselektiver Strahlteiler wirkt. Daher wird durch den dichroitischen Filter 71 in definierter Weise Licht einer bestimmten Wellenlänge bzw. eines Wellenlängenbereichs in hohem Maße reflektiert und Licht einer anderen bestimmten Wellenlänge oder eines anderen Wellenlängenbereichs in hohem Maße transmittiert. Im Ausführungsbeispiel der Fig. 2 ist der dichroitische Filter 71 so ausgebildet, dass das Fluoreszenz-Licht 25' mit der Wellenlänge λ₂ größtenteils durch den dichroitischen Filter 71 in Richtung einer ersten Kamera 61 reflektiert und damit das Strömungsbild auf der Kamera 61 abgebildet wird. Das am Muster 22 gestreute Licht 231'mit der Wellenlänge λ₁ wird durch den dichroitischen Filter 71 größtenteils transmittiert, und das Musterbild wird auf einer zweiten Kamera 62 abgebildet.

Die Auswertung des Strömungsbilds und des Musterbilds sowie die Ansteuerung des Flächenlichtmodulators 5 erfolgt mit der Signalverarbeitungsplattform 8, die mit den Kameras 61, 62 und mit dem Flächenlichtmodulator 5 informationstechnisch verbunden ist (angedeutet durch Strich-Punkt-Linien in Fig. 2). Bei der Signalverarbeitungsplattform 8 kann es sich um einen PC oder einen FPGA mit den entsprechenden Schnittstellen handeln.

Mittels der Signalverarbeitungsplattform 8 wird das durch Streuung an der Grenzfläche 211 deformierte Musterbild mit dem Muster 22 als idealem Zielbild verglichen, wobei ein Gütefaktor, der z. B. die Abweichung des Musterbilds vom Muster 22 repräsentiert, errechnet wird.

Die Signalverarbeitungsplattform 8 ist mit dem Flächenlichtmodulator 5 informationstechnisch verbunden und steuert die Ausrichtung der Elemente, die dessen reflektierende Oberfläche bilden, auf Basis einer iterativen Optimierung des Gütefaktors, wie zu Fig. 1 beschrieben. Durch die Ausrichtung des Flächenlichtmodulators 5 zur Optimierung des Musterbilds erfolgt auch die Korrektur der Störung durch die offene Grenzfläche 211 bezüglich des Strömungsbilds. Das korrigierte Strömungsbild wird mit der Signalverarbeitungsplattform 8 ausgewertet und kann zur Ermittlung der Strömungsparameter über die bekannten Verfahren, wie PIV, PTV, MTV, genutzt werden.

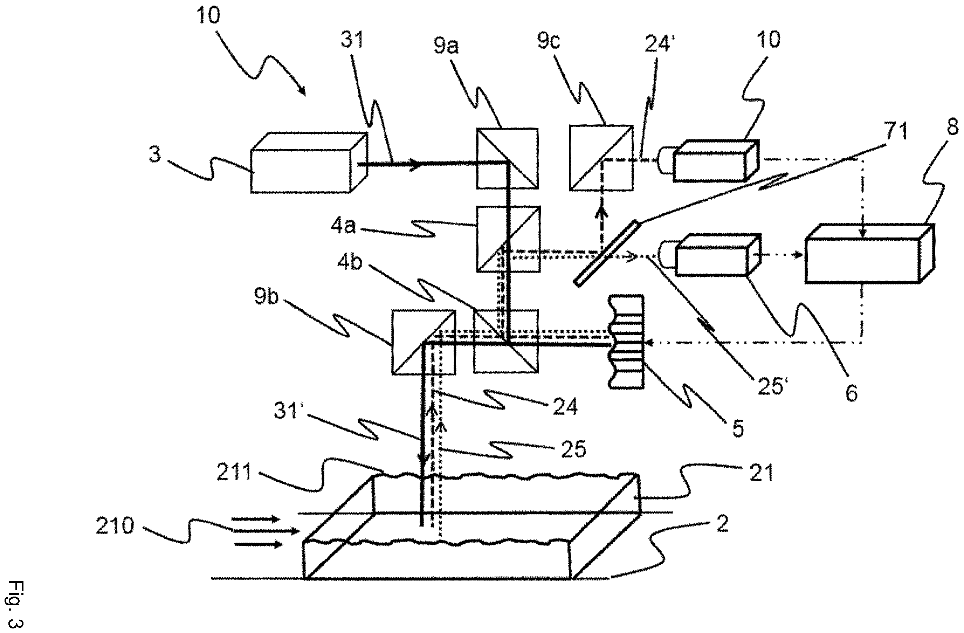

In Fig. 3 ist ein Ausführungsbeispiel einer wellenfrontsensorbasierten Anordnung 10 zur Korrektur optischer Störungen durch eine fluktuierende Grenzfläche 211 in einem bildgebenden Strömungsmessverfahren dargestellt. Wie in Fig. 1 und 2 durchströmt ein Fluid 21 einen Strömungskanal 2 in Strömungsrichtung 210, wobei das Fluid 21 ein offene Grenzfläche 211 zur Umgebung hin aufweist, und wobei durch Streuung an der Grenzfläche 211 eine fluktuierende optische Störung hervorgerufen wird. Zur Vermessung mittels eines bildgebenden Strömungsmessverfahrens enthält das Fluid 21 fluoreszierende Partikel (nicht dargestellt).

Die Beleuchtungsquelle 3 emittiert das Beleuchtungslicht 31, welches eine Beleuchtungswellenlänge λ₁ aufweist. Über ein Reflexionsprisma 9a oder einen Spiegel und einen Strahlteiler 4a wird das Beleuchtungslicht 31 auf einen weiteren Strahlteiler 4b gelenkt und von diesem auf den Flächenlichtmodulator 5 reflektiert, wodurch der Wellenfront des Beleuchtungslichts 31 eine definierte Verzerrung (repräsentiert durch ein Apostroph in der Bezeichnung der Lichtanteile) aufgeprägt wird. Nach Reflexion am Flächenlichtmodulator 5, Transmission durch den Strahlteiler 4b und Umlenkung an einem weiteren Reflexionsprisma 9b in Richtung des Strömungskanals 2 wird das strömende Fluid 21 mit Beleuchtungslicht 31' der Beleuchtungswellenlänge λ₁ beleuchtet.

Ein Anteil des Beleuchtungslichts 31' wird gemäß der fresnelschen Formeln aufgrund des Brechungsindexunterschieds zwischen Fluid 21 und Umgebung an der Grenzfläche 211 reflektiert und erfährt dabei keine Wellenlängenänderung. Das an der Grenzfläche reflektierte Licht mit λ₁ wird im Folgenden als Fresnel-Licht 24 bezeichnet.

Ein anderer Anteil des Beleuchtungslichts 31' wird von den fluoreszierenden Partikeln in dem strömenden Fluid 21 gestreut. Nach Streuung an den fluoreszierenden Partikeln weist das gestreute Licht 25 die Wellenlänge λ₂ auf, die i. d. R. verschieden von λ₁ und gemäß der stokesschen Regel größer als λ₁ ist. Das Fresnel-Licht 24 und das im Folgenden als Fluoreszenz-Licht 25 bezeichnete gestreute Licht werden vom Reflexionsprisma 9b in Richtung des Flächenlichtmodulators 5 umgelenkt und von diesem nach Transmission durch den Strahlteiler 4b reflektiert.

Nach der Reflexion am Flächenlichtmodulator 5 erfolgt eine Umlenkung des Fresnel-Lichts 24' und des Fluoreszenz-Lichts 25' mittels der Strahlteiler 4b und 4a in Richtung eines dichroitischen Filters 71. Der dichroitische Filter 71 weist eine Verspiegelung auf, deren Reflexionsgrad eine Funktion der Wellenlänge des Lichts ist, so dass die Verspiegelung als wellenlängenselektiver Strahlteiler wirkt. Daher wird durch den dichroitischen Filter 71 in definierter Weise Licht einer bestimmten Wellenlänge bzw. eines Wellenlängenbereichs in hohem Maße reflektiert und Licht einer anderen bestimmten Wellenlänge oder eines anderen Wellenlängenbereichs in hohem Maße transmittiert. Im Ausführungsbeispiel der Fig. 3 ist der dichroitische Filter 71 so ausgebildet, dass das Fluoreszenz-Licht 25' mit der Wellenlänge λ₂ größtenteils durch den dichroitischen Filter 71 in Richtung der Kamera 6 transmittiert und das Strömungsbild auf der Kamera 6 abgebildet wird. Das Fresnel-Licht 24' mit der Wellenlänge λ₁ wird am dichroitischen Filter 71 größtenteils reflektiert, und dann mittels eines weiteren Reflexionsprismas 9c in Richtung eines Wellenfrontsensors 10 umgelenkt. Der Wellenfrontsensor 10 kann z. B. als Hartmann-Shack-Sensor ausgebildet sein.

Die mittels des Wellenfrontsensors 10 detektierte, durch die Grenzfläche 211 hervorgerufene Verzerrung der Wellenfronten des Fresnel-Lichts 24' wird mit der Signalverarbeitungsplattform 8 ausgewertet. Mittels der Signalverarbeitungsplattform 8 wird dann ein Parametersatz für die Einstellung des Flächenlichtmodulators 5 berechnet, um durch Ausrichtung der Elemente des Flächenlichtmodulators 5 die ermittelte Wellenfrontverzerrung zu korrigieren. Die Ansteuerung der Elemente des Flächenlichtmodulators 5 erfolgt ebenfalls durch die Signalverarbeitungsplattform 8. Dazu ist die Signalverarbeitungsplattform 8 mit dem Wellenfrontsensor 10 und mit dem Flächenlichtmodulator 5 informationstechnisch verbunden (angedeutet durch Strich-Punkt-Linien in Fig. 2). Bei der Signalverarbeitungsplattform 8 kann es sich um einen PC oder einen FPGA mit den entsprechenden Schnittstellen handeln.

Auch die Auswertung des Strömungsbilds als Abbildung des Fluoreszenz-Lichts 25' kann auf der Signalverarbeitungsplattform 8 durchgeführt werden. Dazu ist die Signalverarbeitungsplattform 8 zusätzlich mit der Kamera 6 informationstechnisch verbunden.

Die Anordnung 1' umfasst einen geschlossenen Regelkreis. Um die Regelung in Echtzeit ausführen zu können, ist die Aktualisierungsrate des Regelkreises mindestens doppelt so groß wie die maximal auftretende Fluktuationsfrequenz der optischen Störung durch die offene Grenzfläche 211 zu wählen.

Durch die Ausrichtung des Flächenlichtmodulators 5 zur Optimierung der Wellenfrontverzerrung des Fresnel-Lichts 24' erfolgt gleichermaßen die Korrektur der Störung durch die offene Grenzfläche 211 bezüglich des Strömungsbilds. Das korrigierte Strömungsbild kann dann zur Ermittlung der Strömungsparameter über die bekannten Verfahren, wie PIV, PTV, MTV, genutzt werden.

### Bezugszeichen

- 1,1a: Wellenfrontsensorlose Anordnung
- 10: Wellenfrontsensorbasierte Anordnung
- 2: Strömungskanal
- 21: Fluid
- 210: Strömungsrichtung
- 211: Grenzfläche
- 22: Muster
- 23: Gestreutes Licht
- 23': Gestreutes Licht nach Reflexion am Flächenlichtmodulator
- 231: Am Muster gestreutes Licht
- 231': Am Muster gestreutes Licht nach Reflexion am Flächenlichtmodulator
- 24: Fresnel-Licht
- 24': Fresnel-Licht nach Reflexion am Flächenlichtmodulator
- 25: Fluoreszenz-Licht
- 25': Fluoreszenz-Licht nach Reflexion am Flächenlichtmodulator
- 3: Beleuchtungsquelle
- 31: Beleuchtungslicht
- 31': Beleuchtungslicht nach Reflexion am Flächenlichtmodulator
- 4a, 4b: Strahlteiler
- 5: Flächenlichtmodulator
- 6: Kamera
- 61: Erste Kamera
- 62: Zweite Kamera
- 7: Wellenlängenbandpass
- 71: Dichroitischer Filter
- 8: Signalverarbeitungsplattform
- 9a, 9b, 9c: Reflexionsprisma
- 10: Wellenfrontsensor

## Patentansprüche

1. Anordnung (1) zur Korrektur optischer Störungen durch eine Grenzfläche (211) in bildgebenden Strömungsmessverfahren zur Vermessung eines strömenden Fluids (21), wobei das strömende Fluid (21) Tracer enthält, die als Streupartikel ausgebildet sind, aufweisend
- eine Beleuchtungsquelle (3) ausgebildet zur Beleuchtung eines von dem strömenden Fluid (21) durchströmten Messfelds, wobei in dem Messfeld ein ortsfestes optisches Muster (22) angeordnet ist;
- mindestens eine Kamera (6) ausgebildet zur Aufnahme des Strömungsbilds als Abbildung des von den Tracern im strömenden Fluid (21) gestreuten Lichts und des Musterbilds als Abbildung des von dem ortsfesten Muster (22) gestreuten Lichts, wobei die Beleuchtungsquelle (3) und/oder die mindestens eine Kamera (6) so angeordnet sind, dass die Beleuchtung und/oder die Beobachtung des strömenden Fluids (21) und des Musters (22) durch die Grenzfläche (211) erfolgt;
- einen ansteuerbaren Wellenfrontmodulator (5), der im optischen Weg zwischen dem Messfeld und der Kamera (6) oder im optischen Weg zwischen der Beleuchtungsquelle (3) und dem Messfeld oder im optischen Weg zwischen der Beleuchtungsquelle (3) und dem Messfeld sowie zwischen dem Messfeld und der Kamera (6) angeordnet ist;
- eine Signalverarbeitungsplattform (8) ausgebildet zur Auswertung zumindest des Musterbilds, wobei zur Ermittlung eines Gütefaktors der Abbildung das Musterbild mit dem Muster (22) verglichen wird, sowie zur Ansteuerung des Wellenfrontmodulators (5) zu dessen Ausrichtung, wobei die Ausrichtung des Wellenfrontmodulators (5) dergestalt erfolgt, dass der Gütefaktor iterativ optimiert wird.

2. Anordnung (1a) nach Anspruch 1, **dadurch gekennzeichnet, dass**
- die Anordnung eine erste Kamera (61) und eine zweite Kamera (62) aufweist;
- die Tracer des strömenden Fluids (21) oder das Muster (22) fluoreszierend ausgebildet sind, oder die Tracer des strömenden Fluids (21) und das Muster (22) fluoreszierend ausgebildet sind, wobei die Fluoreszenzwellenlängen voneinander verschieden sind;
- im optischen Weg zwischen dem Messfeld und den Kameras (6) Mittel zur Wellenlängenselektion (71) angeordnet sind, wobei die Mittel zur Wellenlängenselektion (71) so ausgestaltet sind, dass Licht einer ersten Wellenlänge zu einem überwiegenden Anteil mit der ersten Kamera (61) detektiert wird und Licht einer zweiten Wellenlänge zu einem überwiegenden Anteil mit der zweiten Kamera (62) detektiert wird.

3. Anordnung (1a) nach Anspruch 2, **dadurch gekennzeichnet, dass** die Mittel zur Wellenlängenselektion als Mittel (71) zur teilweisen Reflexion von Licht, die eine Verspiegelung umfassen, welche als wellenlängenabhängiger Strahlteiler wirkt ausgebildet sind.

4. Anordnung nach Anspruch 2, **dadurch gekennzeichnet, dass** die Mittel zur Wellenlängenselektion mindestens einen wellenlängenunabhängigen Strahlteiler und mindestens zwei wellenlängenselektive Filterelemente umfassen, wobei die mittels der Filterelemente selektierten Wellenlängen voneinander verschieden sind.

5. Anordnung (1) nach einem der Ansprüche 1 bis 4, **dadurch gekennzeichnet, dass** der Wellenfrontmodulator (5) ein Flächenlichtmodulator mit einer reflektierenden beleuchteten Oberfläche ist und eine Kombination mehrerer adaptiver optischer Korrekturelemente umfasst.

6. Anordnung (1) nach einem der Ansprüche 1 bis 5, **dadurch gekennzeichnet, dass** die Signalverarbeitungsplattform (8) einen FPGA oder einen Grafikprozessor oder einen digitalen Signalprozessor oder eine Kombination aus diesen aufweist.

7. Verfahren zur Korrektur optischer Störungen durch eine Grenzfläche (211) in bildgebenden Strömungsmessverfahren zur Vermessung eines strömenden Fluids (21), wobei das strömende Fluid (21) Tracer enthält, die als Streupartikel ausgebildet sind, und wobei in dem von dem strömenden Fluid (21) durchströmten Messfeld ein ortsfestes optisches Muster (22) angeordnet ist, **dadurch gekennzeichnet, dass** das strömende Fluid (21) mit einer Beleuchtungsquelle (3) beleuchtet wird, die Ansteuerung eines im optischen Weg zwischen dem Messfeld und einer Kamera (6), wobei die Kamera (6) zur Aufnahme des Strömungsbilds als Abbildung des von den Tracern im strömenden Fluid (21) gestreuten Lichts und des Musterbilds als Abbildung des von dem ortsfesten Muster (22) gestreuten Lichts dient, oder im optischen Weg zwischen der Beleuchtungsquelle (3) und dem Messfeld, oder im optischen Weg zwischen der Beleuchtungsquelle (3) und dem Messfeld sowie zwischen dem Messfeld und der Kamera (6) angeordneten Wellenfrontmodulators (5) dergestalt erfolgt, dass ein durch Vergleich des Musterbilds mit dem Muster (22) ermittelter Gütefaktor iterativ optimiert wird.

8. Anordnung (10) zur Korrektur optischer Störungen durch eine Grenzfläche (211) in bildgebenden Strömungsmessverfahren zur Vermessung eines strömenden Fluids (21), wobei das strömende Fluid (21) Tracer enthält, die als fluoreszierende Partikel ausgebildet sind, aufweisend
- mindestens eine Beleuchtungsquelle (3) ausgebildet zur Beleuchtung eines von dem strömenden Fluid (21) durchströmten Messfelds mit Licht (31) mindestens einer Beleuchtungswellenlänge durch die Grenzfläche (211);
- einen Wellenfrontsensor (10) ausgebildet zur Detektion des von der Grenzfläche (211) gemäß der fresnelschen Formeln reflektierten Lichts der mindestens einen Beleuchtungswellenlänge;
- eine Kamera (6) ausgebildet zur Aufnahme des Strömungsbilds als Abbildung des von den Tracern des strömenden Fluids (21) gestreuten Lichts einer von der Beleuchtungswellenlänge verschiedenen Wellenlänge;
- im optischen Weg zwischen dem Messfeld und dem Wellenfrontsensor (10) sowie zwischen dem Messfeld und der Kamera (6) angeordnete Mittel (71) zur teilweisen Reflexion, die eine Verspiegelung umfassen, die als wellenlängenabhängiger Strahlteiler wirkt, wobei Licht der mindestens einen Beleuchtungswellenlänge zu einem überwiegenden Anteil in Richtung des Wellenfrontsensors (10) abgelenkt wird, und Licht einer von der mindestens einen Beleuchtungswellenlänge verschiedenen Wellenlänge zu einem überwiegenden Anteil in Richtung der Kamera (6) abgelenkt wird;
- einen ansteuerbaren Wellenfrontmodulator (5), der im optischen Weg zwischen dem Messfeld und der Kamera (6) sowie zwischen dem Messfeld und dem Wellenfrontsensor (10), oder im optischen Weg zwischen der Beleuchtungsquelle (3) und dem Messfeld, oder im optischen Weg zwischen der Beleuchtungsquelle (3) und dem Messfeld sowie zwischen dem Messfeld und der Kamera (6) sowie zwischen dem Messfeld und dem Wellenfrontsensor (10) angeordnet ist;
- mindestens eine Signalverarbeitungsplattform (8) ausgebildet zur Auswertung zumindest der mittels des Wellenfrontsensors (10) detektierten Daten zur Ermittlung der Wellenfrontverzerrung aufgrund der optischen Störung durch die Grenzfläche (211) sowie zur Ansteuerung des Wellenfrontmodulators (5);
wobei der Wellenfrontmodulator (5) von der Signalverarbeitungsplattform (8) dergestalt angesteuert wird, dass durch Wechselwirkung mit dem Wellenfrontmodulator (5) die ermittelte Wellenfrontverzerrung korrigiert wird.

9. Anordnung (10) nach Anspruch 8, **dadurch gekennzeichnet, dass** das strömende Fluid (21) Tracer enthält, die als Streupartikel ausgebildet sind, wobei die Anordnung derart ausgebildet ist, dass das von dem strömenden Fluid (21) durchströmte Messfeld mit Licht (31) einer ersten Beleuchtungsquelle (3) mit einer Beleuchtungswellenlänge durch die Grenzfläche (211) beleuchtet wird und die Streupartikel mit Licht einer zweiten Beleuchtungsquelle mit einer von der Beleuchtungswellenlänge verschiedenen Wellenlänge beleuchtet werden, wobei die Kamera (6) zur Aufnahme des Strömungsbilds als Abbildung des von den Streupartikeln des strömenden Fluids (21) gestreuten Lichts der von der Beleuchtungswellenlänge verschiedenen Wellenlänge ausgebildet ist und wobei die zwischen dem Messfeld und der Kamera (6) angeordneten Mittel (71) zur teilweisen Reflexion als Strahlteiler ausgebildet sind.

10. Anordnung (10) nach Anspruch 8, **dadurch gekennzeichnet, dass** der Wellenfrontsensor(10) einen Sensor vom Hartmann-Shack-Typ umfasst.

11. Anordnung (10) nach Anspruch 8, **dadurch gekennzeichnet, dass** der Wellenfrontsensor(10) eine Anordnung zur Durchführung von Holographie umfasst.

12. Anordnung (10) nach einem der Ansprüche 8 bis 11, **dadurch gekennzeichnet, dass** der Wellenfrontmodulator (5) ein Flächenlichtmodulator mit einer reflektierenden beleuchteten Oberfläche ist und eine Kombination mehrerer adaptiver optischer Korrekturelemente umfasst.

13. Anordnung (10) nach einem der Ansprüche 8 bis 12, **dadurch gekennzeichnet, dass** die Signalverarbeitungsplattform (8) einen FPGA oder einen Grafikprozessor oder einen digitalen Signalprozessor oder eine Kombination aus diesen aufweist.

14. Anordnung (10) nach einem der Ansprüche 8 bis 13, **dadurch gekennzeichnet, dass** die Beleuchtungsquelle (3) mindestens zwei Wellenlängen zur Beleuchtung des von dem strömenden Fluid (21) durchströmten Messfelds emittiert, oder dass die Anordnung mindestens zwei Beleuchtungsquellen (3) aufweist, die jeweils voneinander verschiedene Wellenlängen zur Beleuchtung des von dem strömenden Fluid (21) durchströmten Messfelds emittieren, wobei aus den mindestens zwei Wellenlängen eine synthetische Wellenlänge berechnet werden kann, die größer als jede der mindestens zwei Wellenlängen ist, undwobei durch Überlagerung des an der Grenzfläche (211) reflektierten Lichts mit mindestens zwei voneinander verschiedenen Wellenlängen mittels des Wellenfrontsensors (10) der absolute Phasenhub aufgrund der optischen Störung durch die Grenzfläche (211) ermittelt wird, und wobei der Wellenfrontmodulator (5) von der Signalverarbeitungsplattform (8) dergestalt angesteuert wird, dass durch Wechselwirkung mit dem Wellenfrontmodulator (5) der ermittelte absolute Phasenhub korrigiert wird.

15. Verfahren zur Korrektur optischer Störungen durch eine Grenzfläche (211) in bildgebenden Strömungsmessverfahren zur Vermessung eines strömenden Fluids (21), wobei das strömende Fluid (21) Tracer enthält, die als fluoreszierende Partikel ausgebildet sind, umfassend die folgenden Verfahrensschritte:
a. Beleuchtung eines von dem strömenden Fluid (21) durchströmten Messfelds durch die Grenzfläche (211) mit Licht mindestens einer Beleuchtungswellenlänge und Wechselwirkung des strömenden Fluids (21) mit dem Licht mindestens einer Beleuchtungswellenlänge, wobei das Licht nach Reflexion gemäß der fresnelschen Formeln an der Grenzfläche (211) die mindestens eine Beleuchtungswellenlänge aufweist und nach Streuung an den fluoreszierenden Partikeln des strömenden Fluids (21) eine von der mindestens einen Beleuchtungswellenlänge verschiedene Wellenlänge;
b. Trennung der Gesamtheit des von der Grenzfläche (211) reflektierten Lichts und des von den fluoreszierenden Partikeln gestreuten Lichts in Abhängigkeit von der Wellenlänge in einen die mindestens eine Beleuchtungswellenlänge aufweisenden Anteil und einen eine von der mindestens einen Beleuchtungswellenlänge verschiedene Wellenlänge aufweisenden Anteil;
c. Ablenkung des die mindestens eine Beleuchtungswellenlänge aufweisenden Anteils in Richtung eines Wellenfrontsensors (10), Detektion des die mindestens eine Beleuchtungswellenlänge aufweisenden Anteils mittels des Wellenfrontsensors (10) und Auswertung der detektierten Daten mittels einer Signalverarbeitungsplattform (8) zur Ermittlung einer Wellenfrontverzerrung;
d. Ablenkung des eine von der mindestens einen Beleuchtungswellenlänge verschiedene Wellenlänge aufweisenden Anteils in Richtung einer Kamera (6) und Abbildung des Strömungsbilds auf der Kamera (6);
e. Auswertung des Strömungsbilds mittels der einen oder einer zweiten Signalverarbeitungsplattform (8);
wobei eine Wechselwirkung des von der Grenzfläche (211) reflektierten Lichts und des von den fluoreszierenden Partikeln im strömenden Fluid (21) gestreuten Lichts, oder des zur Beleuchtung des strömenden Fluids (21) dienenden Lichts, oder des zur Beleuchtung des strömenden Fluids (21) dienenden Lichts sowie des von der Grenzfläche (211) reflektierten und des von den fluoreszierenden Partikeln im strömenden Fluid (21) gestreuten Lichts, mit einem ansteuerbaren Wellenfrontmodulator (5) erfolgt, und der Wellenfrontmodulator (5) mittels der Signalverarbeitungsplattform (8) dergestalt zu dessen Ausrichtung angesteuert wird, dass durch Wechselwirkung mit dem Wellenfrontmodulator (5) die ermittelte Wellenfrontverzerrung korrigiert wird.

## Claims

1. Arrangement (1) for correcting optical disturbances caused by a boundary surface (211) in imaging flow measurement methods for measuring a flowing fluid (21), wherein the flowing fluid (21) contains tracers which are designed as scattering particles, comprising
- an illumination source (3) designed to illuminate a measuring field through which the flowing fluid (21) flows, wherein a stationary optical pattern (22) is arranged in the measuring field;
- at least one camera (6) designed to record the flow pattern as an image of the light scattered by the tracers in the flowing fluid (21) and to record the pattern image as an image of the light scattered by the stationary pattern (22), wherein the illumination source (3) and/or the at least one camera (6) are arranged such that the illumination and/or the observation of the flowing fluid (21) and the pattern (22) takes place through the boundary surface (211);
- a controllable wavefront modulator (5) which is arranged in the optical path between the measuring field and the camera (6) or in the optical path between the illumination source (3) and the measuring field or in the optical path between the illumination source (3) and the measuring field and between the measuring field and the camera (6);
- a signal processing platform (8) which is designed to evaluate at least the pattern image, wherein the pattern image is compared with the pattern (22) to determine a quality factor of the image, and to control the wavefront modulator (5) with respect to its orientation, wherein the wavefront modulator (5) is oriented in such a way that the quality factor is iteratively optimised.

2. Arrangement (1a) according to claim 1, **characterised in that**
- the arrangement comprises a first camera (61) and a second camera (62);
- the tracers of the flowing fluid (21) or the pattern (22) are fluorescent, or the tracers of the flowing fluid (21) and the pattern (22) are fluorescent, the fluorescence wavelengths being different from one another;
- means for wavelength selection (71) are arranged in the optical path between the measuring field and the cameras (6), the means for wavelength selection (71) being designed such that light of a first wavelength is detected predominantly by means of the first camera (61) and light of a second wavelength is detected predominantly by means of the second camera (62).

3. Arrangement (1a) according to claim 2, **characterised in that** the means for wavelength selection are designed as means (71) for partial reflection of light, which means have a mirror coating which acts as a wavelength-dependent beam splitter.

4. Arrangement according to claim 2, **characterised in that** the means for wavelength selection comprise at least one wavelength-independent beam splitter and at least two wavelength-selective filter elements, the wavelengths selected by means of the filter elements being different from one another.

5. Arrangement (1) according to any of claims 1 to 4, **characterised in that** the wavefront modulator (5) is a surface light modulator which has a reflective illuminated surface and comprises a combination of a plurality of adaptive optical correction elements.

6. Arrangement (1) according to any of claims 1-5, **characterised in that** the signal processing platform (8) comprises an FPGA or a graphics processor or a digital signal processor or a combination thereof.

7. Method for correcting optical disturbances caused by a boundary surface (211) in imaging flow measurement methods for measuring a flowing fluid (21), the flowing fluid (21) containing tracers which are designed as scattering particles and a stationary optical pattern (22) being arranged the measuring field through which the flowing fluid (21) flows, **characterised in that** the flowing fluid (21) is illuminated by an illumination source (3), and a wavefront modulator (5) which is arranged in an optical path between the measuring field and a camera (6), the camera (6) being used to record the flow pattern as an image of the light scattered by the tracers in the flowing fluid (21) and to record the pattern image as an image of the light scattered by the stationary pattern (22), or is arranged in the optical path between the illumination source (3) and the measuring field, or in the optical path between the illumination source (3) and the measuring field and between the measuring field and the camera (6), is controlled in such a way that a quality factor determined by comparing the pattern image with the pattern (22) is iteratively optimised.

8. Arrangement (10) for correcting optical disturbances caused by a boundary surface (211) in imaging flow measurement methods for measuring a flowing fluid (21), wherein the flowing fluid (21) contains tracers which are designed as fluorescent particles, comprising
- at least one illumination source (3) designed to illuminate a measuring field through which the flowing fluid (21) flows with light (31) of at least one illumination wavelength through the boundary surface (211);
- a wavefront sensor (10) designed to detect the light of the at least one illumination wavelength that is reflected by the boundary surface (211) in accordance with the Fresnel equations;
- a camera (6) designed to record the flow pattern as an image of the light which is scattered by the tracers of the flowing fluid (21) and is of a wavelength different from the illumination wavelength;
- means (71) for partial reflection which are arranged in the optical path between the measuring field and the wavefront sensor (10) and between the measuring field and the camera (6), which means have a mirror coating which acts as a wavelength-dependent beam splitter, wherein light of the at least one illumination wavelength is deflected predominantly in the direction of the wavefront sensor (10), and light of a wavelength different from the at least one illumination wavelength is deflected predominantly in the direction of the camera (6);
- a controllable wavefront modulator (5) which is arranged in the optical path between the measuring field and the camera (6) and between the measuring field and the wavefront sensor (10), or in the optical path between the illumination source (3) and the measuring field, or in the optical path between the illumination source (3) and the measuring field and between the measuring field and the camera (6) and between the measuring field and the wavefront sensor (10);
- at least one signal processing platform (8) designed to evaluate at least the data detected by means of the wavefront sensor (10) in order to determine the wavefront distortion due to the optical interference caused by the boundary surface (211) and to control the wavefront modulator (5);
wherein the wavefront modulator (5) is controlled by the signal processing platform (8) in such a way that the determined wavefront distortion is corrected by interaction with the wavefront modulator (5).

9. Arrangement (10) according to claim 8, **characterised in that** the flowing fluid (21) contains tracers which are designed as scattering particles, the arrangement being designed such that the measuring field through which the flowing fluid (21) flows is illuminated through the boundary surface (211) with light (31) from a first illumination source (3) that has an illumination wavelength, and the scattering particles are illuminated with light from a second illumination source that is of a wavelength different from the illumination wavelength, the camera (6) being designed to record the flow pattern as an image of the light which is scattered by scattering particles of the flowing fluid (21) and is of the wavelength different from the illumination wavelength, and the means (71) for partial reflection arranged between the measuring field and the camera (6) being designed as a beam splitter.

10. Arrangement (10) according to claim 8, **characterised in that** the wavefront sensor (10) comprises a sensor of the Hartmann-Shack type.

11. Arrangement (10) according to claim 8, **characterised in that** the wavefront sensor (10) comprises an arrangement for performing holography.

12. Arrangement (10) according to any of claims 8 to 11, **characterised in that** the wavefront modulator (5) is a surface light modulator having a reflecting illuminated surface and comprises a combination of a plurality of adaptive optical correction elements.

13. Arrangement (10) according to any of claims 8 to 12, **characterised in that** the signal processing platform (8) comprises an FPGA or a graphics processor or a digital signal processor or a combination thereof.

14. Arrangement (10) according to one of claims 8 to 13, **characterised in that** the illumination source (3) emits at least two wavelengths for illuminating the measuring field through which the flowing fluid (21) flows, or **in that** the arrangement has at least two illumination sources (3) which each emit different wavelengths for illuminating the measuring field through which the flowing fluid (21) flows, it being possible to calculate a synthetic wavelength from the at least two wavelengths that is greater than each of the at least two wavelengths, and the absolute phase deviation due to the optical disturbance caused by the boundary surface (211) being determined by means of the wavefront sensor (10) by superimposing the light reflected at the boundary surface (211) with least two different wavelengths, and the wavefront modulator (5) being controlled by the signal processing platform (8) in such a way, that the determined absolute phase deviation is corrected by interaction with the wavefront modulator (5).

15. Method for correcting optical disturbances caused by a boundary surface (211) in imaging flow measurement methods for measuring a flowing fluid (21), wherein the flowing fluid (21) contains tracers which are designed as fluorescent particles, comprising the following method steps:
a. illuminating a measuring field through which the flowing fluid (21) flows with light of at least one illumination wavelength through the boundary surface (211), and interacting the flowing fluid (21) with the light of at least one illumination wavelength, wherein the light, after reflection at the boundary surface (211) in accordance with the Fresnel equations, has the at least one illumination wavelength and, after scattering at the fluorescent particles of the flowing fluid (21), has a wavelength which is different from the at least one illumination wavelength;
b. separating the entirety of the light reflected by the boundary surface (211) and the light scattered by the fluorescent particles, depending on the wavelength, into a portion having the at least one illumination wavelength and a portion having a wavelength which is different from the at least one illumination wavelength;
c. deflecting the portion having the at least one illumination wavelength in the direction of a wavefront sensor (10), detecting the portion having the at least one illumination wavelength by means of the wavefront sensor (10) and evaluating the detected data by means of a signal processing platform (8) in order to determine a wavefront distortion;
d. deflecting the portion having a wavelength which is different from the at least one illumination wavelength in the direction of a camera (6) and imaging the flow pattern on the camera (6);
e. evaluating the flow pattern by means of the one signal processing platform or a second signal processing platform (8);
wherein an interaction of the light reflected by the boundary surface (211) and the light scattered by the fluorescent particles in the flowing fluid (21), or the light used to illuminate the flowing fluid (21), or the light used to illuminate the flowing fluid (21) and the light reflected by the boundary surface (211) and the light scattered by the fluorescent particles in the flowing fluid (21) is carried out with a controllable wavefront modulator (5), and the wavefront modulator (5) is controlled with respect to its orientation by means of the signal processing platform (8) in such a way that the determined wavefront distortion is corrected by interaction with the wavefront modulator (5).

## Revendications

1. Agencement (1) de correction de perturbations optiques par une interface (211) dans des procédés de mesure d'écoulement d'imagerie pour mesurer un fluide en écoulement (21), le fluide en écoulement (21) contenant des traceurs conçus en tant que particules de diffusion, présentant
- une source d'éclairage (3) conçue pour éclairer un champ de mesure à travers lequel s'écoule le fluide en écoulement (21), un motif optique fixe (22) étant disposé dans le champ de mesure ;
- au moins une caméra (6) conçue pour enregistrer l'image d'écoulement en tant que représentation de la lumière diffusée par les traceurs dans le fluide en écoulement (21) et l'image de motif en tant que représentation de la lumière diffusée par le motif fixe (22),
dans lequel la source d'éclairage (3) et/ou l'au moins une caméra (6) sont disposées de telle sorte que l'éclairage et/ou l'observation du fluide en écoulement (21) et du motif (22) sont effectué(e)s par l'interface (211) ;
- un modulateur de front d'onde commandable (5) qui est disposé dans le chemin optique entre le champ de mesure et la caméra (6) ou dans le chemin optique entre la source d'éclairage (3) et le champ de mesure ou dans le chemin optique entre la source d'éclairage (3) et le champ de mesure ainsi qu'entre le champ de mesure et la caméra (6) ;
- une plate-forme de traitement de signaux (8) conçue pour évaluer au moins l'image de motif, l'image de motif étant comparée au motif (22) afin de déterminer un facteur de qualité de la représentation, et afin de commander le modulateur de front d'onde (5) pour son orientation, l'orientation du modulateur de front d'onde (5) étant effectuée de telle sorte que le facteur de qualité est optimisé de manière itérative.

2. Agencement (1a) selon la revendication 1, **caractérisé en ce que**
- l'agencement comprend une première caméra (61) et une seconde caméra (62) ;
- les traceurs du fluide en écoulement (21) ou le motif (22) sont fluorescents, ou les traceurs du fluide en écoulement (21) et le motif (22) sont fluorescents, les longueurs d'onde de fluorescence étant différentes l'une de l'autre ;
- des moyens de sélection de longueur d'onde (71) sont disposés dans le chemin optique entre le champ de mesure et les caméras (6), les moyens de sélection de longueur d'onde (71) étant conçus de telle sorte que la lumière d'une première longueur d'onde est détectée en grande partie au moyen de la première caméra (61) et la lumière d'une seconde longueur d'onde est détectée en grande partie au moyen de la seconde caméra (62).

3. Agencement (1a) selon la revendication 2, **caractérisé en ce que** les moyens de sélection de longueur d'onde sont conçus en tant que moyens (71) de réflexion partielle de la lumière qui comprennent un revêtement miroir, lequel agit en tant que diviseur de faisceau dépendant de la longueur d'onde.

4. Agencement selon la revendication 2, **caractérisé en ce que** les moyens de sélection de longueur d'onde comprennent au moins un diviseur de faisceau indépendant de la longueur d'onde et au moins deux éléments filtrants sélectifs de longueur d'onde, les longueurs d'onde sélectionnées au moyen des éléments filtrants étant différentes l'une de l'autre.

5. Agencement (1) selon l'une des revendications 1 à 4, **caractérisé en ce que** le modulateur de front d'onde (5) est un modulateur de lumière surfacique comportant une surface éclairée réfléchissante et comprend une combinaison de plusieurs éléments de correction optiques adaptatifs.

6. Agencement (1) selon l'une des revendications 1 à 5, **caractérisé en ce que** la plate-forme de traitement de signaux (8) présente un réseau prédiffusé programmable par l'utilisateur (FPGA) ou un processeur graphique ou un processeur de signaux numérique ou une combinaison de ceux-ci.

7. Procédé de correction de perturbations optiques par une interface (211) dans des procédés de mesure d'écoulement d'imagerie pour mesurer un fluide en écoulement (21), le fluide en écoulement (21) contenant des traceurs conçus en tant que particules de diffusion, et un motif optique fixe (22) étant disposé dans le champ de mesure à travers lequel s'écoule le fluide en écoulement (21), **caractérisé en ce que** le fluide en écoulement (21) est éclairé par une source d'éclairage (3), que la commande d'un modulateur de front d'onde (5) disposé dans le chemin optique entre le champ de mesure et une caméra (6), la caméra (6) permettant d'enregistrer l'image d'écoulement en tant que représentation de la lumière diffusée par les traceurs dans le fluide en écoulement (21) et de l'image du motif en tant que représentation de la lumière diffusée par le motif fixe (22), ou dans le chemin optique entre la source d'éclairage (3) et le champ de mesure, ou dans le chemin optique entre la source d'éclairage (3) et le champ de mesure ainsi qu'entre le champ de mesure et la caméra (6), est effectuée de telle sorte qu'un facteur de qualité déterminé en comparant l'image de motif avec le motif (22) est optimisé de manière itérative.

8. Agencement (10) de correction de perturbations optiques par une interface (211) dans des procédés de mesure d'écoulement d'imagerie pour mesurer un fluide en écoulement (21), le fluide en écoulement (21) contenant des traceurs conçus en tant que particules fluorescentes, présentant
- au moins une source d'éclairage (3) conçue pour éclairer un champ de mesure à travers lequel s'écoule le fluide en écoulement (21) avec une lumière (31) d'au moins une longueur d'onde d'éclairage par l'interface (211) ;
- un capteur de front d'onde (10) conçu pour détecter la lumière de l'au moins une longueur d'onde d'éclairage réfléchie par l'interface (211) conformément aux formules de Fresnel ;
- une caméra (6) conçue pour enregistrer l'image d'écoulement en tant que représentation de la lumière diffusée par les traceurs du fluide en écoulement (21) d'une longueur d'onde différente de la longueur d'onde d'éclairage ;
- des moyens (71) de réflexion partielle disposés dans le chemin optique entre le champ de mesure et le capteur de front d'onde (10) ainsi qu'entre le champ de mesure et la caméra (6), lesquels comprennent un revêtement miroir qui agit en tant que diviseur de faisceau dépendant de la longueur d'onde, la lumière de l'au moins une longueur d'onde d'éclairage étant déviée en grande partie dans la direction du capteur de front d'onde (10), et la lumière d'une longueur d'onde différente de l'au moins une longueur d'onde d'éclairage étant déviée en grande partie dans la direction de la caméra (6) ;
- un modulateur de front d'onde commandable (5) disposé dans le chemin optique entre le champ de mesure et la caméra (6) ainsi qu'entre le champ de mesure et le capteur de front d'onde (10), ou dans le chemin optique entre la source d'éclairage (3) et le champ de mesure, ou dans le chemin optique entre la source d'éclairage (3) et le champ de mesure ainsi qu'entre le champ de mesure et la caméra (6) ainsi qu'entre le champ de mesure et le capteur de front d'onde (10) ;
- au moins une plate-forme de traitement du signaux (8) conçue pour évaluer au moins les données détectées au moyen du capteur de front d'onde (10) afin de déterminer la distorsion de front d'onde due à la perturbation optique par l'interface (211) et afin de commander le modulateur de front d'onde (5) ;
dans lequel le modulateur de front d'onde (5) est commandé par la plate-forme de traitement de signaux (8) de telle sorte que la distorsion de front d'onde déterminée est corrigée par interaction avec le modulateur de front d'onde (5).

9. Agencement (10) selon la revendication 8, **caractérisé en ce que** le fluide en écoulement (21) contient des traceurs conçus en tant que particules de diffusion, l'agencement étant conçu de telle sorte que le champ de mesure à travers lequel s'écoule le fluide en écoulement (21) est éclairé avec la lumière (31) d'une première source d'éclairage (3) d'une longueur d'onde d'éclairage par l'interface (211) et les particules de diffusion sont éclairées avec la lumière d'une seconde source d'éclairage d'une longueur d'onde différente de la longueur d'onde d'éclairage, la caméra (6) étant conçue pour enregistrer l'image d'écoulement en tant que représentation de la lumière diffusée par les particules de diffusion du fluide en écoulement (21) d'une longueur d'onde différente de la longueur d'onde d'éclairage et les moyens (71) disposés entre le champ de mesure et la caméra (6) étant conçus en tant que diviseurs de faisceau pour la réflexion partielle.

10. Agencement (10) selon la revendication 8, **caractérisé en ce que** le capteur de front d'onde (10) comprend un capteur de type Hartmann-Shack.

11. Agencement (10) selon la revendication 8, **caractérisé en ce que** le capteur de front d'onde (10) comprend un agencement permettant de réaliser l'holographie.

12. Agencement (10) selon l'une des revendications 8 à 11, **caractérisé en ce que** le modulateur de front d'onde (5) est un modulateur de lumière surfacique comportant une surface éclairée réfléchissante et comprend une combinaison de plusieurs éléments de correction optiques adaptatifs.

13. Agencement (10) selon l'une des revendications 8 à 12, **caractérisé en ce que** la plate-forme de traitement de signaux (8) comporte un FPGA ou un processeur graphique ou un processeur de signaux numérique ou une combinaison de ceux-ci.

14. Agencement (10) selon l'une des revendications 8 à 13, **caractérisé en ce que** la source d'éclairage (3) émet au moins deux longueurs d'onde permettant d'éclairer le champ de mesure à travers lequel s'écoule le fluide en écoulement (21), ou **en ce que** l'agencement présente au moins deux sources d'éclairage (3) qui émettent respectivement des longueurs d'onde différentes les unes des autres afin d'éclairer le champ de mesure à travers lequel s'écoule le fluide en écoulement (21), une longueur d'onde synthétique pouvant être calculée à partir des au moins deux longueurs d'onde, laquelle est supérieure à chacune des au moins deux longueurs d'onde, et l'amplitude de déphasage absolue due à la perturbation optique par l'interface (211) étant déterminée en superposant la lumière réfléchie sur l'interface (211) avec au moins deux longueurs d'onde différentes les unes des autres au moyen du capteur de front d'onde (10), et le modulateur de front d'onde (5) étant commandé par la plate-forme de traitement de signaux (8) de telle sorte qu'en interagissant avec le modulateur de front d'onde (5), l'amplitude de déphasage absolue déterminée est corrigée.

15. Procédé de correction de perturbations optiques par une interface (211) dans des procédés de mesure d'écoulement d'imagerie pour mesurer un fluide en écoulement (21), le fluide en écoulement (21) contenant des traceurs conçus en tant que particules fluorescentes, comprenant les étapes de procédé suivantes :
a. éclairage d'un champ de mesure à travers lequel s'écoule le fluide en écoulement (21) par l'interface (211) avec une lumière d'au moins une longueur d'onde d'éclairage et interaction du fluide en écoulement (21) avec la lumière d'au moins une longueur d'onde d'éclairage, la lumière, après réflexion, présentant l'au moins une longueur d'onde d'éclairage sur l'interface (211) conformément aux formules de Fresnel et, après diffusion sur les particules fluorescentes du fluide en écoulement (21), une longueur d'onde différente de l'au moins une longueur d'onde d'éclairage ;
b. séparation de l'intégralité de la lumière réfléchie par l'interface (211) et de la lumière diffusée par les particules fluorescentes en fonction de la longueur d'onde en une partie présentant l'au moins une longueur d'onde d'éclairage et une partie présentant une longueur d'onde différente de l'au moins une longueur d'onde d'éclairage ;
c. déviation de la partie présentant l'au moins une longueur d'onde d'éclairage dans la direction d'un capteur de front d'onde (10), détection de la partie présentant l'au moins une longueur d'onde d'éclairage au moyen du capteur de front d'onde (10) et évaluation des données détectées au moyen d'une plate-forme de traitement de signaux (8) afin de déterminer une distorsion de front d'onde ;
d. déviation de la partie présentant une longueur d'onde différente de l'au moins une longueur d'onde d'éclairage dans la direction d'une caméra (6) et représentation de l'image d'écoulement sur la caméra (6) ;
e. évaluation de l'image d'écoulement au moyen de l'une ou d'une seconde plate-forme de traitement de signaux (8) ;
dans lequel une interaction de la lumière réfléchie par l'interface (211) et de la lumière diffusée par les particules fluorescentes dans le fluide en écoulement (21), ou de la lumière utilisée pour éclairer le fluide en écoulement (21), ou de la lumière utilisée pour éclairer le fluide en écoulement (21) ainsi que de la lumière réfléchie par l'interface (211) et la lumière diffusée par les particules fluorescentes dans le fluide en écoulement (21) est effectuée avec un modulateur de front d'onde (5) commandable, et le modulateur de front d'onde (5) est commandé, au moyen de la plate-forme de traitement de signaux (8), en vue de son orientation de telle sorte que la distorsion de front d'onde déterminée est corrigée par interaction avec le modulateur de front d'onde (5).
